# EUROPEAN PATENT APPLICATION

(11) **EP 2 645 703 A2**
(43) Date of publication of application: **02.10.2013**
(21) Application number: 13161613.8
(22) Date of filing: 28.03.2013
(51) Int. Cl.: H04N 5/232

(54) **Image processing apparatus and method of camera device**

(30) Priority: 28.03.2012 KR 20120031445
(71) Applicant: Samsung Electronics Co., Ltd, Gyeonggi-do 443-742 (KR)
(72) Inventor: Lee, Yonggu, 443-742 Gyeonggi-do (KR)
(74) Representative: Nederlandsch Octrooibureau

(57) **Abstract**

An image processing apparatus 200 capable of performing a method for processing the image taken by a camera includes a camera 110 that generates full resolution images. The image processing apparatus 200 also includes a buffer 240 that buffers the full resolution images; a viewing image processor that scales the buffered full resolution images to generate viewing images; a capture image processor that processes one of the buffered full resolution images to generate a capture image; a display unit 130 that displays the viewing images; and a storage unit 120 that stores the capture image.

## Description

### TECHNICAL FIELD

The present application relates to an image processing apparatus and method and, in particular, to an apparatus and method for processing the image taken by a camera.

### BACKGROUND

A camera device and camera-equipped mobile terminal device is capable of processing high quality images and providing various user convenience functions. The recent camera device is equipped with an image sensor (or camera sensor) capable of processing full High Definition (HD) or higher resolution images.

The camera device displays the image sensed by the camera sensor in a preview mode and saves the image acquired by the camera sensor in response to the push on a shutter button. There exists a shutter delay or (shutter lag) between triggering the shutter and when the camera records a photograph actually. That is, there is the time difference between when the user presses the shutter and when the image processor processing the photo completely, and this is referred to as lag. The shutter delay (shutter) lag is the reason why the user misses the perfect shot.

If the camera is shaken or if the person as an object to be shot takes an unintended action, such as closing their eyes, at shooting timing, there is a limit in correcting the capture image and in restaging the same situation, resulting in failure of perfect shot.

### SUMMARY

To address the above-discussed deficiencies of the prior art, it is a primary object to provide an image processing apparatus and method of a camera device or camera-equipped terminal device that is capable of capturing an image at the shooting time without shutter lag. Embodiments of the present disclosure propose an image processing apparatus and method of a camera device or camera-equipped terminal device that is capable of buffering images in taking a still image and capturing a wanted frame image among the buffered images. In order to accomplish the objects, the camera device or camera-equipped terminal device according to an embodiment of the present disclosure buffers and processes the images captured by the camera as viewing images and selects a frame image meeting the predetermined conditions among the buffered full-resolution images to process the selected image as a still image.

Also, embodiments of the present disclosure propose an image processing apparatus and method of a camera device or camera-equipped terminal device that is capable of processing the images taken by the camera at every frame to generate preview images and candidate-capture images separately.

In accordance with an aspect of the present disclosure, an image processing apparatus of a camera device includes a camera that generates full resolution images; a buffer that buffers the full resolution images; a viewing image processor that scales the buffered full resolution images to generate viewing images; a capture image processor that processes one of the buffered full resolution images to generate a capture image; a display unit that displays the viewing images; and a storage unit that stores the capture image.

In accordance with another aspect of the present disclosure, a mobile terminal apparatus includes a camera which generates full resolution images in camera operation mode; an image processor that buffers the full resolution images generated by the camera at every frame period and scales the full resolution images to viewing images simultaneously and encodes the image taken at a shutter press time among the buffered images, in response to a capture request, to generate a capture image compensated for shutter lag; an application processor that buffers the viewing and capture images output by the image processor, displays the viewing image in a preview mode, and displays viewing images and stores the capture image in a capture mode; a display unit that displays the viewing image under the control of the application processor; and a storage unit that stores the capture image under the control of the application processor.

In accordance with another aspect of the present disclosure, an image processing method of a camera device includes buffering and converting full resolution images of a camera to viewing images to be displayed at every frame period in a camera operation mode; and generating and storing a capture image compensated for shutter lag by encoding the image taken at shutter press time among the buffered images in response to a capture request.

In accordance with another aspect of the present disclosure, a camera device includes a camera that generates full resolution images in camera operation mode; a first buffer that buffers images generated by the camera at every frame; at least two image processors that process frame images having predetermined frame numbers buffered in the first buffer to generate full resolution image and viewing images; a second buffer that buffers the viewing images output by the image processors in order of frame numbers; a display unit that displays the viewing images output by the second buffer; a third buffer that buffers the full resolution images output by the image processors in order of frame number; a still image codec that encodes the image taken at a shutter press time among the images buffered in the third buffer in response to a capture request; and a storage unit that stores the encoded image.

In accordance with still another aspect of the present disclosure, an image processing method of a camera device includes buffering images generated by a camera at every frame in a first buffer; generating full resolution images and viewing images by processing the frame images with predetermined frame numbers in the first buffer using plural image processors; buffering the viewing images output by the image processors in the second buffer in the order of frame number; displaying the viewing images output from a second buffer; buffering the full resolution images output by the image processors in a third buffer in the order of frame number; and encoding and storing the image taken at a shutter press time among the images buffered in the third buffer in response to a capture request.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a configuration of the camera device according to an embodiment of the present disclosure;

FIG. 2 illustrates a configuration of the image processor of the camera device of FIG. 1 according to an embodiment of the present disclosure;

FIG. 3 illustrates the configuration of the image processor of the camera device of FIG. 1 according to an embodiment of the present disclosure;

FIGs. 4a and 4b illustrate exemplary pixel patterns for explaining operations of the averaging unit of FIG. 3;

FIG. 5 illustrate the configuration of the image processor of FIG. 1 according to an embodiment of the present disclosure;

FIG. 6 illustrate a configuration of the image processor of the camera device of FIG. 1 according to an embodiment of the present disclosure;

FIG. 7 illustrate an exemplary capture image generation process according to the operation clock selected by the image processor of FIG. 6;

FIG. 8 illustrate a configuration of the image processor 200 of FIG. 1 according to another embodiment of the present disclosure;

FIGs. 9a to 9c illustrate exemplary image patterns for explaining the image processing operation of FIG. 8;

FIG. 10 is a block diagram illustrating the configuration of the image processor 200 of FIG. 1 according to another embodiment of the present disclosure;

FIG. 11 illustrate the configuration of the camera device according to an embodiment of the present disclosure;

FIG. 12 illustrate the configuration of the image processor of the camera device of FIG. 11 according to an embodiment of the present disclosure;

FIG. 13 illustrate a configuration of the image processor of the camera device structured in FIG. 11;

FIG. 14 illustrate a configuration of the camera device according to an embodiment of the present disclosure;

FIG. 15 illustrate a configuration of the image processor of FIG. 14;

FIG. 16 illustrate a configuration of the application processor of FIG. 14;

FIG. 17 illustrate a image processing method of the camera device or camera-equipped terminal device according to an embodiment of the present disclosure;

FIG. 18 illustrate a preview mode image processing procedure of the camera device according to an embodiment of the present disclosure;

FIG. 19 illustrate details of the preview image generation and display step of FIG. 18;

FIG. 20 illustrate details of the capture image generation step of FIG. 17;

FIG. 21 illustrate the capture image processing at a speed selected by the user between the high and low processing speeds which is applicable in FIG. 20;

FIG. 22 illustrate the process of segmenting a capture image, processing the segmented image blocks, and combining the processed block to generate the frame image in the capture image procedure of FIG. 20;

FIG. 23 illustrate the image processing procedure in the preview mode of the camera device according to another embodiment of the present disclosure;

FIG. 24 illustrate the capture image processing procedure of the camera device according to another embodiment of the present disclosure; and

FIG. 25 illustrate the configuration of the camera device according to an embodiment of the present disclosure.

### DETAILED DESCRIPTION

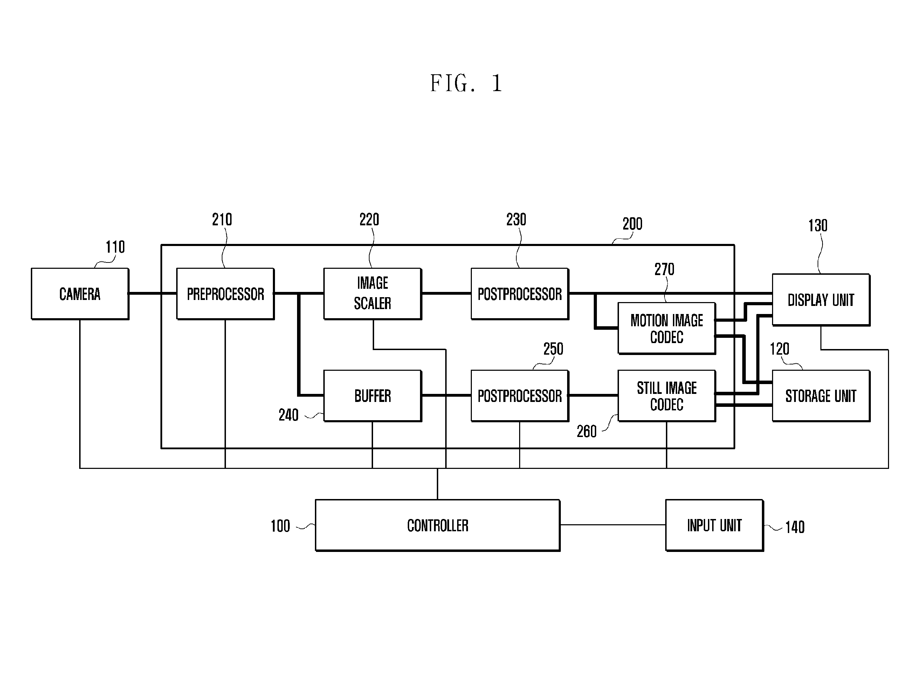

FIGURES 1 through 25, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged _image capturing device. Exemplary embodiments of the present disclosure are described with reference to the accompanying drawings in detail. The same reference numbers are used throughout the drawings to refer to the same or like parts.

Although detailed features such as number of pixels of image, meta data item, and data size are presented in the following description, it is obvious to those skilled in the art that these are given as examples only to help understand the disclosure but not restrict the present disclosure. In the following description, detailed description of well-known functions and structures incorporated herein may be omitted to avoid obscuring the subject matter of the present disclosure.

The camera device or camera-equipped terminal according to an embodiment of the present disclosure processes images acquired from the image sensor of the camera at every frame in an operation mode (e.g. preview mode) to generate viewing images and capture images for use in the form of motion and still images. In this case, the camera device acquires images from the camera at every frame period to generate preview images and capture-candidate images while displaying the preview image on a display unit and buffering the capture-candidate images. If a capture request is detected in this state, the camera device selects one the buffered frame images at the capture request detection timing and stores the selected frame image in a compressively encoded format.

As described above, the camera device or camera-equipped terminal device according to an embodiment of the present disclosure acquires an image from the camera at every frame while scaling and processing the image to be displayed on the display unit and buffering the images in full camera resolution simultaneously. If a capture request is input by the user, the camera device or camera-equipped terminal device selects and processes the frame image taken at the shooting time among the buffered frame images and stores the processed image in an encoded format. A pickup device is capable of being synchronized with the display or mecha-shutter.

Typically, the camera device has a shutter lag between when the user presses the shutter and when the camera captures the image. The camera device according to an embodiment of the present disclosure is provided with a buffer for storing the camera's full resolution images in separation with the viewing image and buffers the full resolution images while the camera is operating. The camera device selects and processes one of the frame buffered frame images at shooting request timing so as to achieve zero shutter lag. In an embodiment of the present disclosure, the buffer can be configured to store a predetermined number of frame images and large enough to compensate for the shutter lag in size. Typically, the shutter lag is likely to occur before or after 2 frames. Accordingly, it is preferred to configure the buffering window less than 5 frames.

In the following description, the term "full-resolution image" denotes the image acquired by the camera which is not scaled (before being processed into viewing image). The term "viewing image" denotes the image displayed on the display unit in preview mode and/or the image for use in storing a motion image that is captured by scaling the image acquired by the camera into a predetermined size (or resolution). Here, the viewing image can be equal to or different from the preview image and/or motion image in resolution (size). The viewing image and motion image can be different from each other in size. That is, the motion image can be processed to be greater or less than the viewing image in size. The term "capture image" denotes an image to be processed into a still image as the full resolution image acquired by the camera or the image acquired by scaling the image acquired by the camera into a predetermined size. In an embodiment of the present disclosure, the description is made under the assumption that the capture image is the camera's full resolution image.

The term "image scaling" denotes adjusting the size of the full resolution image into a predetermined size (or resolution). In an embodiment of the present disclosure, the image scaling can be achieved with a resizing and adding and equalizing method. Here, resizing means a method for adjusting the image size by decimating, interpolating, and cropping the image, and the addition and averaging method is to adjust the number of pixels by integrating adjacent pixels into a pixel.

FIG. 1 illustrates a configuration of the camera device according to an embodiment of the present disclosure.

Referring to FIG. 1, the camera 110 is responsible for acquiring image by means of a sensor in operation mode. The camera 100 is provided with an optical unit, an image sensor, and a signal processor. The optical unit is driven by the mecha-shutter, motor, and actuator and performs zooming and focusing operations by means of the actuator. The optical unit picks up an image of a subject, and the image sensor converts the pickup image to an electric signal. Here, the image sensor can be any of CMOS, CCD sensor, and high definition image sensor. The image sensor of the camera can include a global shutter. The global shutter performs a function similar to that of the mecha-shutter included in the sensor. The camera 110 is also capable of including a viewfinder.

In an embodiment of the present disclosure, the image sensor can be the sensor capable of sensing an image with Ultra High Definition (UHD) or higher resolution. The image sensed by the image sensor 220 is converted into a digital image by the signal processor. The output data of the camera 110 can be Bayer data (raw data).

The image processor 200 according to an embodiment of the present disclosure is capable of including a controller, a preprocessor, a preview/movie ISP, and a still capture ISP.

The preprocessor 210 is responsible for the function of preprocessing the image acquired from the camera 110. Here, the preprocessing function is capable of including 3A (i.e. Auto White Balance (AWB), Auto Exposure (AE), and Auto Focusing (AF)) extraction and processing, lens shading correction, dead pixel correction, knee compensation, etc. The preprocessed image data are output to the respective preview/movie ISP and still capture ISP.

In the case of the preview/mode ISP, the image scaler 220 is responsible for adjusting the full resolution image output by the preprocessor 210 in size to be fit for the display unit 130 and/or for storing in the format of a motion image. The postprocessor 230 performs color interpolation, noise cancelation, and color compensation on the scaled Bayer data to generate YUV data. The image output by the postprocessor 230 is YUV data scaled to the screen size of the display unit 130.

The viewing image can be used as a motion image to be stored. In this case, if a motion image shot request is input, the motion image codec 270 encodes the viewing image and stores the encoded image in the storage unit 120. Here, the viewing image can be identical with the preview image in size. The motion image can be the viewing image composed of the pixels larger than the preview image in number. In this case, the image scaler 220 can be composed of a preview mode scaler and a motion image mode scaler or a variable scaler capable of changing the scaling rate according to the mode control. If a motion image capture is requested, the controller 100 controls the image scaler 220 to scale the size of the image into a motion image such that the image scaler 220 scales the full resolution image output by the preprocessor 210 to the size of the motion image size. Here, the motion image can be coded in various formats such as H.264.

In the case of the still capture ISP, the buffer 240 buffers the full resolution image output by the preprocessor 210. Here, the buffer 240 is preferable configured to have a size large enough to store the frame images that capable of compensating the shutter lag of the camera device and, in an embodiment of the present disclosure, structured in the form of a ring buffer having a size equal to or less than 5 frame images. The buffer 240 buffers the full resolution images output by the preprocessor 210 and one of buffered images is accessed in response to the capture request under the control of the controller 100. The postprocessor 250 performs color interpolation, noise canceling, color compensation, and color conversion on the full resolution image selected from the buffer 240 to generate YUV data. The still image codec 260 encodes the full resolution image output by the postprocessor 250 compressively.

The controller 100 controls the operation of the camera device according to the control command input through the input unit 140. If a camera driving command input through the input unit 100, the controller 100 controls the camera 110 and the image processor 200 such that the camera operates in the preview mode. If a capture request is input through the input unit 140, the controller 100 selects the full resolution image at the capture request timing from the buffer 240 and stores the selected full resolution image, as encoded compressively, in the storage unit 120.

Although the description is directed to the case where the storage unit 120 is a memory for storing images taken by the camera device in a still image format in an embodiment of the present disclosure, the storage unit 120 is also capable of storing the motion images. The display unit 130 can be a display device such as LCD and LED and display the images taken by the camera device and shooting information. The input unit 140 is provided with a plurality buttons for configuring functions of the camera device and executing commands. The buttons of the input unit 140 can include keys arranged on the body of the camera device and virtual keys provided on a touch panel. In this case, some buttons provided by the display unit 130 and the input unit 140 can be presented on a touchscreen.

In the above-structured camera device, if the user inputs a camera driving command by means of the input unit 140, the controller 100 drives the camera 110. The image output by the camera 110 can be a full resolution Bayer image acquired by the camera 110 to be input to the preprocessor 210. The preprocessor 210 generates frame image at every frame period under the control of the controller 100. Here, the frame rate can be 30 frames per sec (fps) or higher (e.g. 60fps). The preprocessor 210 extracts the A3 (AWB, AE, and AF) from the frame image and performs lens shading compensation, dead pixel correction and knee compensation. The preprocessed image is a full resolution image to be supplied to the image scaler 220 and buffer 240.

The image scaler 220 scales the input full resolution image to fit for the screen size of the display unit 130. Here, the image scaling can be performed with at least one of resizing, decimation, interpolation, crop, addition, and averaging. The image scaling can be performed to reduce the number of pixels of the full resolution image acquired from the camera a110 to fit for the screen size of the display unit 130 or the aspect ratio of the screen of the display unit 130. Here, the image scaling can be performed to various aspect ratios, e.g. 4:1 in an embodiment of the present disclosure. In the case that the 8-Mbyte image is acquired by the camera 110, the image scaler 220 is capable of scaling the image into 20-Mbyte viewing image.

The scaled image is then post-processed by the postprocessor 230. In the post-processing phase, the color interpolation, noise reduction, gamma compensation, and color conversion can be performed. That is, the postprocessor 230 converts the pixel data to the data composed of RGB components through color interpolation, corrects the noise of the color interpolated pixel data, and then converts the noise-reduced data to YUV data. The post-processed viewing image is displayed on the screen of the display unit 130.

The buffer 240 buffers the full resolution images output by the preprocessor 210 at every frame period. As aforementioned, the buffer 240 has a ring buffer structure so as to buffer a predetermined number of frame images. That is, the buffer 240 has a structure of N ring buffers for storing N frame images data and buffers the frame image data output by the preprocessor 210 at every frame. The frame image data generated at every frame are buffered to the first to the last buffer of the buffer 240 in sequence and, once they are filled with the data, overwritten from the first buffer again. Here, N can be set to a value equal to or less than 5 and, in this case, the ring buffers of the buffer 240 are configured to store 5 or less image data. Assuming that the shutter lag is 2 frames, it is preferred to set the size of buffer 260 to 3 frames (N=3). At this time, the controller 110 controls the buffer 240 to buffer the high resolution frame images generated at every frame period without operations of the postprocessor 250 and still image codec 260.

The camera device according to an embodiment of the present disclosure operates the preprocessor 210, the image scaler 220, and the postprocessor 230 in the preview mode to process the frame images acquired by the camera 110 and display the processed image on the screen of the display unit 130 while the buffer 240 buffers the full resolution images. That is, the image processor 200 performs operation for generating the viewing images but not any operation for storing images. At this time, since the viewing image is scaled down to a small size image while buffering the high resolution images for capturing, the camera device is in a low electric current consumption and low heat generation state.

Typically, the camera device misses the perfect shot of an image presented in the viewfinder or on the screen of the display unit 130 due to the shutter delay as much as a certain number of frames. That is, the camera device as the shutter lag (or time lag) between when the user pressing the shutter and when the camera device records an image actually. The shutter lag varies depending on the camera device, and the controller 100 has to know the shutter lag measured statically. In an embodiment of the present disclosure, when the shutter press is detected, the camera device selects one of the buffered frame images in consideration of the shutter lag to achieve zero shutter lag.

If a capture request is input through the input unit 140 in the preview mode, the controller 100 drives the postprocessor 250 and the still image codec 260. The controller 110 detects the shutter press timing, selects one of the buffered images in consideration of a predetermined shutter lag, and transfers the selected frame image to the postprocessor 250. The postprocessor performs post-processing (color interpolation, noise correction, gamma compensation, image conversion, etc.) on the frame image output from the buffer 240, and the still image codec 260 encodes the image output by the postprocessor 250 and stores the encoded image in the storage unit 120. At this time, the postprocessor 250 outputs YUV image, and the still image codec 260 can be a JPEG encoder. Although the description is directed to the case that the still image is Joint Photographic Expert Group (JPEG) image in this embodiment, the still image can be other still image format (e.g. Tagged-Image File Format (TIFF)). The image encoded compressively is stored in the storage unit 120.

Although the description is directed to the case that the capture image is the full resolution image of the camera 110, the full resolution image can be scaled if necessary. That is, the user can configure the camera device to capture a still image smaller than the full resolution image in size (or in resolution). In this case, the user can configure the camera device to take an image small in size (or pixel number). Although an embodiment of the present disclosure is directed to the case having a buffer for buffering full resolution images, the capture image processor can be configured with an image scaler at the output end of the buffer 240 which is different from the image scaler 220. In this case, if a capture request command indicating the size (or pixel number) of the image is input through the input unit 140, the controller 100 controls to transfer the output of the buffer 240 to the image scaler (not the image scaler 220) such that the image scaler scales the full resolution image to the user-intended image size (or resolution) for post-processing. In the following, a description is made of an embodiment of the present disclosure under the assumption that the capture image is a full resolution image.

If a capture request is input in the preview mode, the camera device according to an embodiment of the present disclosure selects a subframe image corresponding to the shutter press time from the buffer 240 and performs post-processing and encoding on the selected frame image to achieve zero shutter lag. At this time, the preprocessor 210, the image scaler 220, and the postprocessor 230 operate in the same manner as the preview mode operation, and the generated viewing image is displayed on the screen of the display unit 130.

As described above, the camera device according to an embodiment of the present disclosure is capable of achieving zero shutter lag. The image acquired by the camera 110 at the shutter press time of the camera device is the frame image acquired after the user-intended capture image due to the shutter lag (time lag or shutter delay). That is, the image which the user wants to capture is a frame image prior to the captured image. In order to compensate for the shutter lag (to achieve zero shutter lag), the method according to an embodiment of the present disclosure selects one of the previously buffered frame images as the capture image.

When a capture request is input by the user, the photo to be captured may not be taken normally. In an exemplary case of taking a portrait picture, the picture model may close eyes or the camera may be shaken. In this case, it is preferred to capture another frame image. According to an embodiment of the present disclosure, the camera device is capable of selecting, if necessary, another frame image among the predetermined number of frame images buffered in the buffer 240. The controller 100 captures and displays one of the buffered full resolution images of the camera 110 in response to the capture request, the selected image being capable of achieving zero shutter lag. In the still image capture mode, the controller 100 can activate items (icons or buttons) representing the selectable buffered images. At this time, if the image with zero shutter lag is shaken or inappropriate for use, the user is capable of requesting for displaying another image by selecting a corresponding item by means of the input unit 140. If the user request is detected, the controller 100 detects the user request and displays the full resolution image represented by the selected item on the screen of the display unit 130 in order for the user to determine whether to capture the corresponding image as the still image. According to an embodiment of the present disclosure, the camera device is capable of selecting one of plural buffered frame images and thus, if the captured image is inappropriate for use, replacing the captured image with another buffered image. If the user requests for a continuous shot mode (burst shot mode), the controller 100 accesses the frame images buffered at the continuous shot is requested sequentially, the postprocessor 250 processes the sequentially accessed frame images, and the still image codec 260 encodes the images sequentially and stores the encoded images in the storage unit 120. That is, in the burst shot mode, the full resolution images taken by the camera 110 are buffered in the buffer 240 at every frame period, and the controller 100 is capable of accessing the buffered full resolution images to process and encode sequentially and store the encoded images.

If a still image playback request is input through the input unit 140 in the above state, the controller 100 accesses the requested still image in the storage unit, the still image codec 260 decodes the accessed still image, and the display unit 130 displays the decoded still image. If a motion image playback request is input through the input unit 140, the controller 100 accesses the requested motion image in the storage unit 120, the motion image codec 270 decodes the motion image, and the display unit 130 displays the decoded motion image.

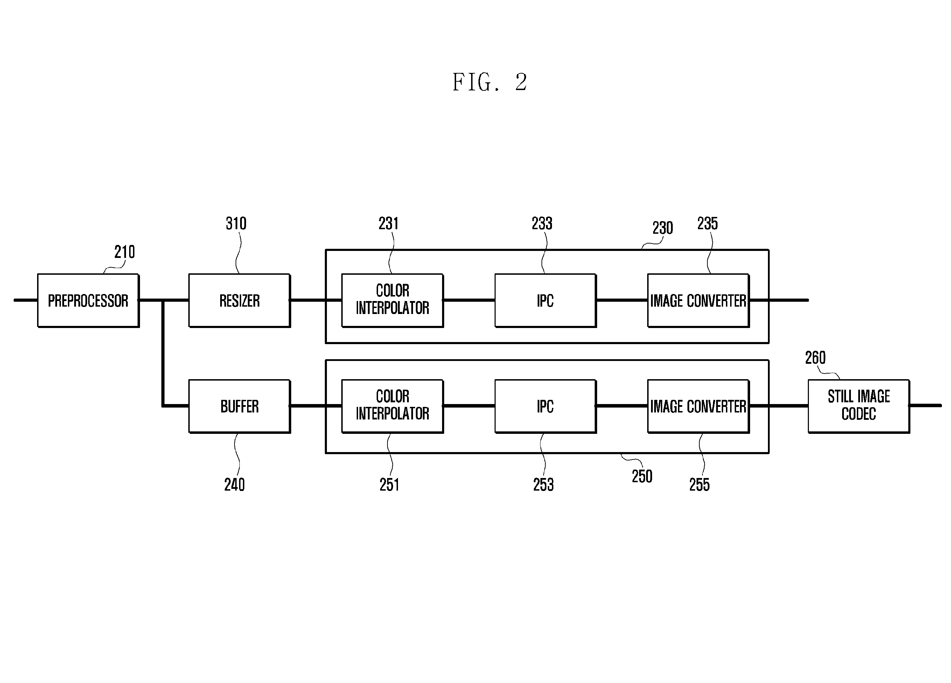

FIG. 2 illustrates a configuration of the image processor 200 of FIG. 1 according to an embodiment of the present disclosure. FIG. 1 is directed to the case where the image scaler 220 is implemented with a resizer 310.

Referring to FIG. 2, the preprocessor 210 performs pre-processing on the full resolution image acquired from the camera 110. The resizer 310 resizes the full resolution image output by the preprocessor 210 in volume and size to be fit for the screen size of the display unit 130. At this time, the resizing can be accomplished through decimation and interpolation and decimation to fit the image for the aspect ratio of the display unit 130. The viewing image scaled by the resizer 310 is supplied to the postprocessor 230.

The postprocessor 230 includes a color interpolator 231, an Image Processing Chain 233, and an Image Converter 235. The color interpolator 231 executes a color interpolation function for converting the Bayer data output by the camera 110 to a color image. As aforementioned, the image sensor of the camera 110 can be a CCD or CMOS image sensor. At this time, the CCD/CMOS image sensor uses a color filter array such that each pixel sensor has one of three colors channels for generating a color image. The color interpolation is the function for converting the pixels constituting the image output by the camera 110 to three colors of RGB (full color conversion). The color interpolator 231 is responsible for the color interpolation function using the correlation among adjacent pixels. Typically, the image processing performed before the color interpolation is referred to as pre-processing and the image processing performed before the color interpolation is referred to as post-processing in the image processing device. Secondly, the IPC 233 performs noise reduction, gamma correction, and luminance correction on the interpolated image. Thirdly, the image converter 235 converts the post-processed image to a YUV image. That is, the post-processor 230 is responsible for performing the color interpolation and post-processing on the resized and scaled image and converts the post-processed image to a YUV image.

The post-processed YUV image is supplied to the display unit 130 so as to be displayed as preview image.

The full resolution image output by the preprocessor 210 is buffered in the buffer 240. At this time, the buffer 240 is configured in the structure of ring buffer and thus the buffered frame image is maintained until the buffer is full and, if the buffer is full, the oldest frame image is overwritten with new one. In the preview mode, the postprocessor 250 and the still image codec 260 are not operating to save power.

In the preview mode, if a capture request is input through the input unit 140, the controller 100 accesses the frame image fulfilling a predetermined condition among the frame images buffered in the buffer 240 in consideration of the shutter lag. The controller 100 knows the shutter lag frame period (i.e. shutter lag time) which can be expressed a number of frames from the shutter press time. In an embodiment of the present disclosure, it is assumed that the shutter lag is equal to 2 frames (or 3 frames). In this case, if a capture request is detected, the controller 100 selects the frame image buffered in the buffer 240 before 2 frames (3 frames) and sends the selected frame image to the postprocessor 250. Accordingly, the image input to the post processor 250 is the shutter lag-compensated image (zero shutter lag image).

The postprocessor 250 is identical with the postprocessor 230 in structure with the exception of size. That is, the postprocessor 230 is configured with the viewing image size (e.g. 1/4 size (or resolution) of full resolution image) while the postprocessor 250 with the full resolution image size. The postprocessor 250 performs color interpolation and IPC processing on the full resolution image and converts the IPC-processed image to a YUV image. The YUV image is encoded by the still image codec 260 compressively and then stored, as a capture image, in the storage unit 120. Here, the coded capture image can be a JPEG image.

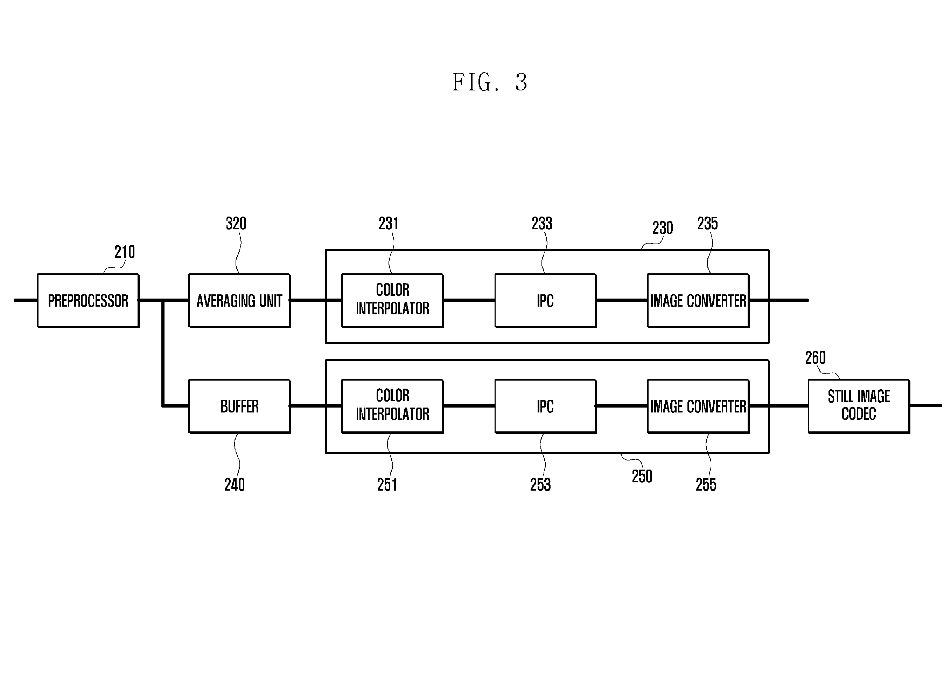

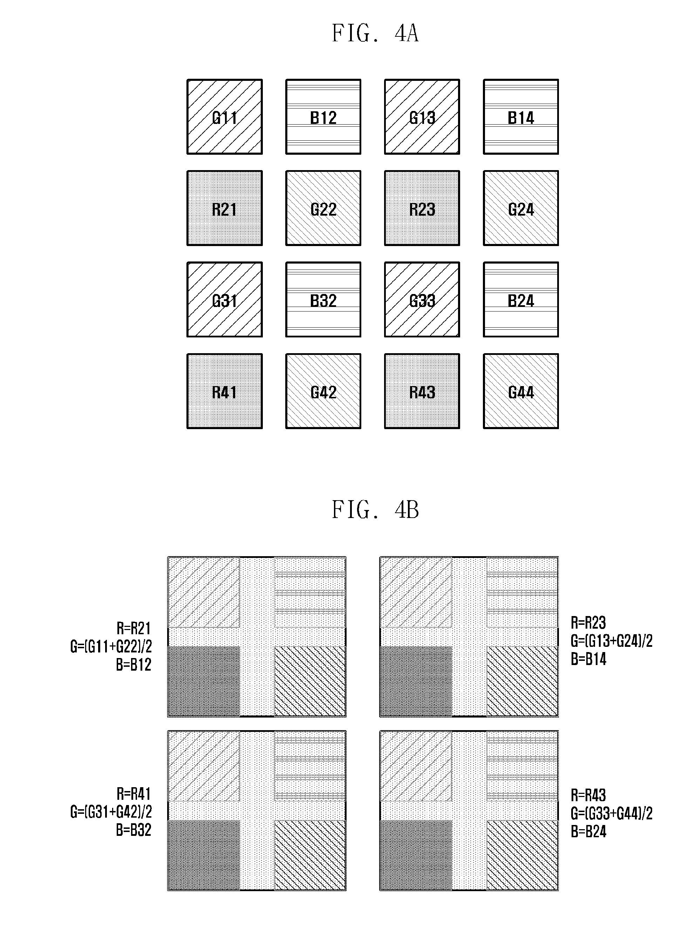

FIG. 3 illustrates a configuration of the image processor 200 of FIG. 1 according to another embodiment of the present disclosure. FIG. 3 is directed to the case where the image scaler 220 is implemented with an averaging unit 320. FIGs. 4a and 4b illustrate exemplary pixel patterns for explaining operations of the averaging unit 320 of FIG. 3.

Referring to FIGs. 3, 4a, and 4b, the processor 210 preprocesses the full resolution image acquired from the camera 110. The averaging unit 210 averages the pixels of the full resolution image output by the preprocessor 210 to reduce the number of pixels. Here, the averaging unit 320 is capable of improving the signal to noise ratio and resolution using a pseudo-Foveon method. The pixels of the image output by the camera 110 are patterned as shown in FIG. 4a. In the structure of FIG. 4a, the 4 adjacent pixels consist of one R pixel, one B pixel, and 2 G pixels. Accordingly, the image can be scaled at the ratio of 4:1 by equalizing four pixels into one pixel. The averaging unit (summing average) 320 is summing and averaging the 4 pixels into one pixel. In order to achieve this, the method according to an embodiment of the present disclosure generates one G pixel by summing and averaging the two G pixels and then processed the averaged G, R, and B into a single pixel. In the exemplary case of FIG. 4a, in order to process the G11, B12, R21, and G22 pixels to generate one pixel, the pixel having RGB value is generated by R=R21, B=B12, and G=(G11+G22)/2. Through this averaging operation, the four pixels can be processed to generate one pixel as shown in FIG. 4b along with the color interpolation operation. The 16 pixels of FIG. 4a are averaged to as to be scaled into 4 pixels as shown in FIG. 4b through the above-described method and, at this time, the pixels are color interpolated simultaneously.

The pixels image-scaled by the averaging unit 320 are supplied to the postprocessor 230 which performs color interpolation, IPC processing, and image conversion to generate YUV image. In the case of performing the image scaling operation with the averaging unit 320 of FIG. 3, the color interpolator 231 of the postprocessor 230 is capable of skipping the full color conversion of the pixel data and only performing the color interpolation. The operations of the postprocessor 230 with the exception of the color interpolation are performed in the same process as FIG. 2.

The YUV image obtained through preprocessing is supplied to the display unit 130 to be displayed as a preview image.

The full resolution image output by the preprocessor 210 is buffered in the buffer 240. In the preview mode, the postprocessor 250 and the still image codec 260 are not operating to save power.

In the preview mode, if a capture request is input through the input unit 140, the controller 100 selects one of the frame images buffered in the buffer 240 in consideration of the shutter lag, preprocesses and encodes the selected frame image, and stores the encoded image as a capture image. The still capture ISP operates in the same manner as shown in FIG. 2.

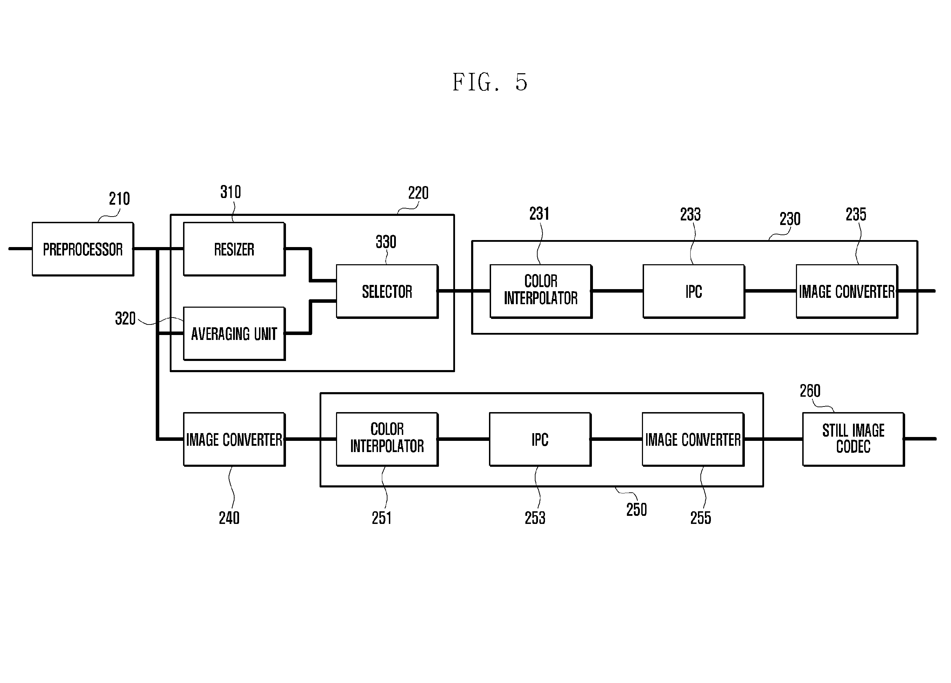

FIG. 5 illustrates a configuration of the image processor 200 of FIG. 1 according to an embodiment of the present disclosure. FIG. 5 is directed to the case where the image scaler 220 is implemented with both the resizer 310 and the average unit 320.

Referring to FIG. 5, the preprocessor 210 preprocesses the full resolution image output by the camera 110. The preprocessed image is supplied to both the resizer 310 and the average unit 320.

In FIG. 5, the image scaler 220 includes the resizer 310 for resizing and converting the preprocessed full resolution image to the size of the viewing image, the averaging unit 320 for summing and averaging the pixels of the preprocessed full resolution image to reduce the number of pixels appropriate for the viewing image, and a selection unit for supplying the outputs of the resizer 310 and the averaging unit 320 to the postprocessor 230 selectively.

Here, the resizer 310 resizes the full resolution image output by the processor 210 to be fit for the display unit 130 in volume and size. At this time, the resizing can be performed through decimation or both the interpolation for fitting the size to the aspect ratio of the display unit 130 and the decimation. The averaging unit (summing average) 320 is summing and averaging the 4 pixels into one pixel. In an embodiment of the present disclosure, it is assumed that the averaging unit 320 averages 4 pixels into 1 pixel. In this case, the averaging unit 320 sums and averages the two pixels to generates one G pixel and then averages the averaged G, R, and B pixels into one pixel. The outputs of the resizer 310 and the averaging unit 320 are transferred to the selection unit 330 such that the selection unit 330 supplies the outputs of the resizer 310 and the average unit 320 to the postprocessor 230 selectively under the control of the controller 100.

The postprocessor 230 performs color interpolation, IPC processing, and image conversion operations on image scaled to be fit for viewing in size (or number of pixels) and outputs the preprocessed YUV viewing image to the display unit 130.

The full resolution image output by the preprocessor 210 is buffered in the buffer 240. In the preview mode, the postprocessor 250 and the still image codec 260 are not operating to reduce power consumption.

In the preview mode, if a capture request is input through the input unit 140, the controller 100 selects one of the frame images buffered in the buffer 240 in consideration of the shutter lag, preprocesses and encodes the selected frame image, and stores the encoded image as a capture image. The still capture ISP operates in the same manner as shown in FIGs. 2 and 3.

In the case that the image processing apparatus is configured as shown in FIG. 5, the user is capable of selecting an image scaler by means of the input unit 140. If the user selects the resizer 310, the controller 100 controls the selection unit 220 to select the output of the resizer 310 and activates the resizer 310. Otherwise if the user selects the averaging unit 320, the controller 100 controls the selection unit 330 to select the output of the averaging unit 320 and activates the averaging unit 320. At this time, the image scaler (averaging unit 320 of the resizer 310) can be deactivated.

In the configuration of FIG. 5, a selection unit can disposed between the preprocessor 210 and the resizer 310 and averaging unit 320 to supply the output of the preprocessor 210 to the image scaler 220 (resizer 310 or averaging unit 320) according to the user's selection. It is also possible to remove the selection unit 330, in the configuration of FIG. 5, and connects the output end of the resizer 310 (or averaging unit 320) to the average unit 320 (or resizer 310) to resize and average the full resolution image of the camera 110 sequentially.

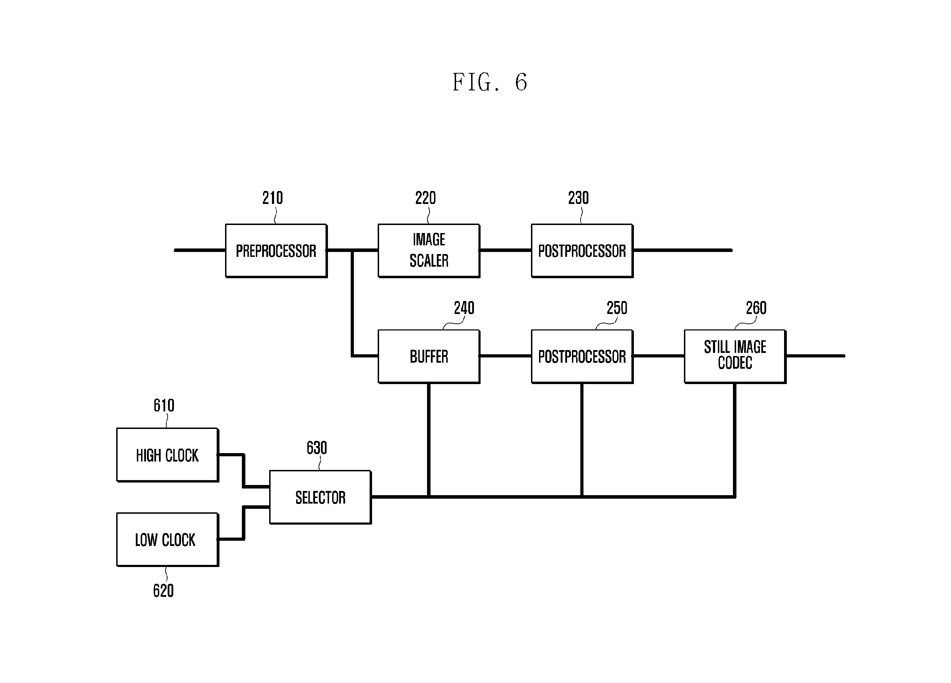

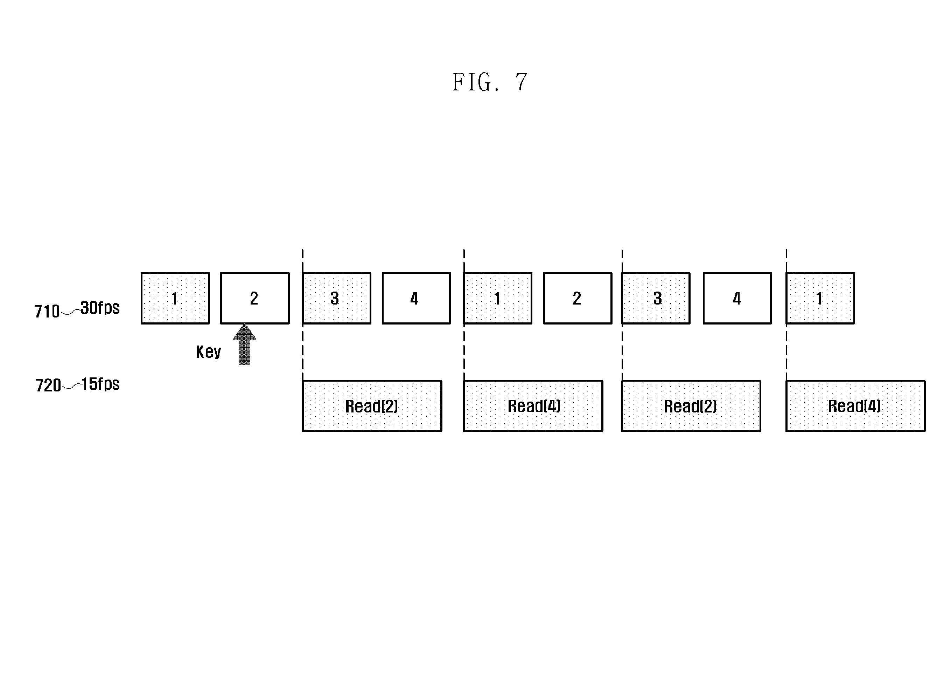

FIG. 6 is a block diagram illustrating the configuration of the image processor 200 of FIG. 1 according to an embodiment of the present disclosure. FIG. 6 shows an exemplary configuration of the image processor 200 capable of adjusting the frame rate by changing the operation frequency selectively in generating the capture image. FIG. 7 is a diagram illustrating an exemplary capture image generation process according to the operation clock selected by the image processor of FIG. 6.

Referring to FIGs. 6 and 7, the preprocessor 210 preprocesses the full resolution image acquired from the camera 100. The preprocessed image is sent to the image scaler 220 to be scaled to the viewing image size and/or pixel number. At this time, the image scaler 220 can be configured with the resizer 310 and/or the averaging unit 320. The postprocessor 230 performs color interpolation, IPC processing, and image conversion on the image scaled by the scaler 310 to generate the YUC viewing image to the display unit 130. The configuration and operation for post-processing the viewing image can be implemented as shown in FIGs. 2 and 3.

In the preview mode, the preprocessor 210 buffers the full resolution images in the buffer 240. In the preview mode, the postprocessor 250 and the still image codec 260 are not operating to save the power.

Here, the image processor 200 is capable of processing the image at the frame rate of 30fps or higher. Assuming that the frame rate of the image processor 200 is 30fps, the 30 frames of viewing images are generated per second. At this time, although the viewing image is scaled as described above, the capture image is processed in the format of the full resolution image of the camera 110. The capture image processing operation consumes relatively large amount of electric current as compared to the viewing image processing operation. The still capture ISP is activated, when the capture image request is detected, and buffers the full resolution images of the camera (or images having the size configured by the user if the image scaler is provided) in the preview mode or motion image recording mode to compensate for the shutter lag. Accordingly, although the operation clock of the preview/movie ISP is lower than the operation clock of the capture image processor, it is possible to compensate for the shutter lag.

FIG. 6 shows an exemplary configuration of the image processor of which operation clock is selected by the user and which uses a relatively low clock speed as compared to the high clock speed identical with the operation clock speed of the viewing image processing unit. Here, it is assumed that the high clock speed is the clock speed capable of processing images at the frame rate of 30fps, and the low clock speed is the clock speed capable of processing the images at the frame rate of 15fps.

The clock generation unit includes a high clock generator 610 generating a clock speed equal to that of the operation clock of the preview/movie ISP and a low clock generator 620 generating a clock speed lower than the high clock speed to provide the operation clock of the capture image processor selectively under the control of the controller 110. Here, the buffer 240 operates at the frame rate of the preview/movie ISP. That is, the buffer 240 buffers the frame images processed by the image processor 200 at the frame rate (e.g. 30 fps) at every frame period.

A description is made of the case where the high clock generator 610 is selected. In this case, the controller 100 controls the selector 630 to supply the higher clock generated by the high clock generator 610 to the buffer 240, postprocessor 250, and still image codec 260 for processing the capture images. The still image codec 260 can be used without change of clock speed. If the capture request is detected, the controller 100 selects a frame image capable of compensating for the shutter lag among the frame images buffered in the buffer 240, generates a capture image by preprocessing and encoding the selected frame image, and stores the capture image. At this time, the controller 100 reads the frame images buffered in the buffer 240 at the clock speed of the high clock generator 610 so as to be able to read the frame images buffered at every frame period as denoted by reference number 710 of FIG. 7, and the postprocessor 250 and the still image codec 260 operate at the clock speed of the higher clock generator 610 so as to post-process and encode the image to be captured in the frame duration at the timing as denoted by reference number 710 of FIG. 7.

Secondly, a description is made of the case where the low clock generator 620 is selected. Even in this case, the buffer 240 buffers the camera's full resolution image generated at every frame. That is, the buffer 240 buffers every frame image output by the preprocessor 210 regardless of the selected clock generator (the high clock generator 610 or the low clock generator 620). If the capture request is detected, the controller 100 reads the frame images buffered in the buffer 240 at the clock speed of the low clock generator 620 as denoted by reference number 720. That is, if the low clock generator 620 is selected, the controller 100 reads the buffer 240 at the clock speed of the low clock generator 620. In the case of FIG. 7, it is assumed that the low clock generator 620 generates the 1/2 clock speed of the high clock speed, and thus the controller 100 can access the frame image in two frame duration as denoted by reference number 720 of FIG. 7. Since the low clock speed of the low clock generator 620 is provided to the postprocessor 250 and the still image codec 260, the postprocessor 250 and the still image codec 260 preprocesses and encodes the image to be captured at the clock speed of the low clock generator as denoted by reference number 720 of FIG. 7. The still image codec 260 can be used without change of clock speed.

Accordingly, in the case that the low clock generator 620 is selected, the capture image is generated at a low frame rate as compared to the case of selecting the high clock generator 610, but it is possible to generate the capture image capable of compensating for the shutter lag to some extent. That is, since the shutter lag is longer than the low clock delay time, if the capture image is generated at the low clock speed, the shutter lag is compensated (in the case that the low clock speed is 1/2 frequency of the high clock speed, the frame processing time at the low clock speed is twice of that of the high clock speed, resulting in the frame processing can delay up to 1 frame).

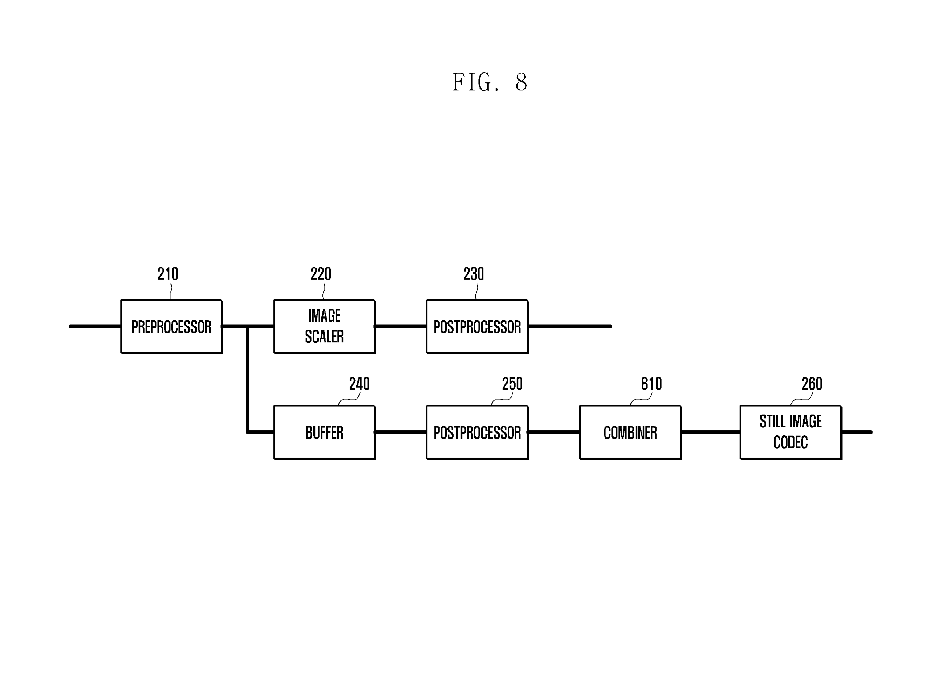

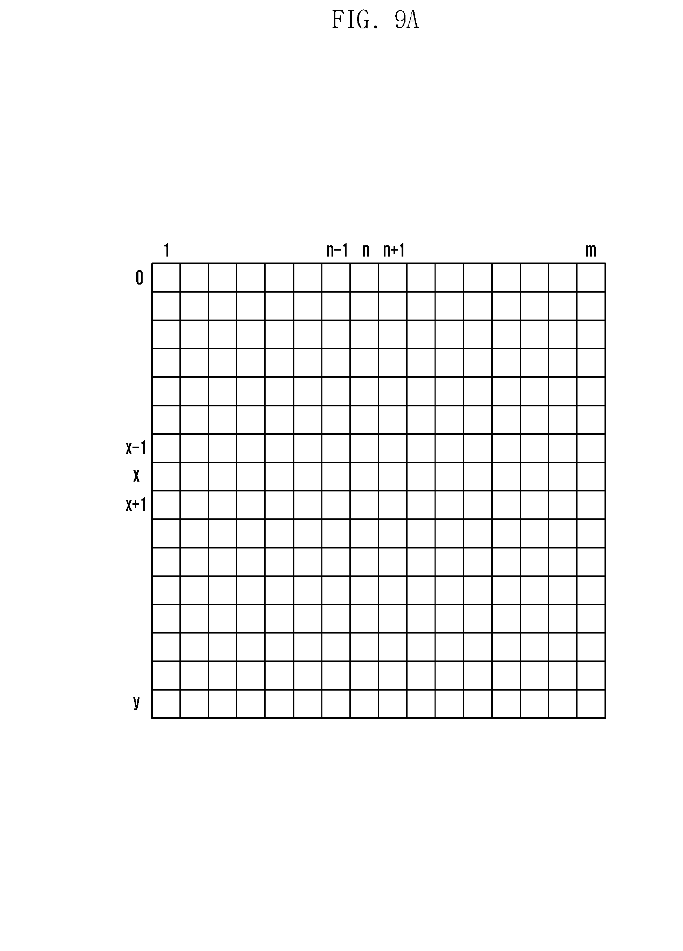

FIG. 8 illustrates a configuration of the image processor 200 of FIG. 1 according to another embodiment of the present disclosure. FIG. 8 shows an exemplary configuration of the image processor 200 capable of segmenting the frame images and generating the capture image by combining the segmented images. FIGs. 9a to 9c illustrate exemplary image patterns for explaining the image processing operation of FIG. 8.

Referring to FIGs. 8 and 9a to 9c, the preprocessor 210 preprocesses the full resolution images acquired by the camera 110. The preprocessed image is sent to the image scaler 220 so as to be scaled to the viewing image size and/or pixel number. At this time, the image scaler 220 can be configured with the resizer 310 and/or the averaging unit 320. The postprocessor 230 performs color interpolation, IPC processing, and image conversion on the image scaled to viewing image in size (or number of pixels) and outputs the YUV viewing image generated through the post-processing operation to the display unit 130. The viewing image processing operation can be performed as described with reference to FIGs. 2 and 3.

In the preview mode, the full resolution images output by the preprocessor 210 are buffered in the buffer 240. In the preview mode, the postprocessor 250 and the still image codec 260 are not operating to save the power.

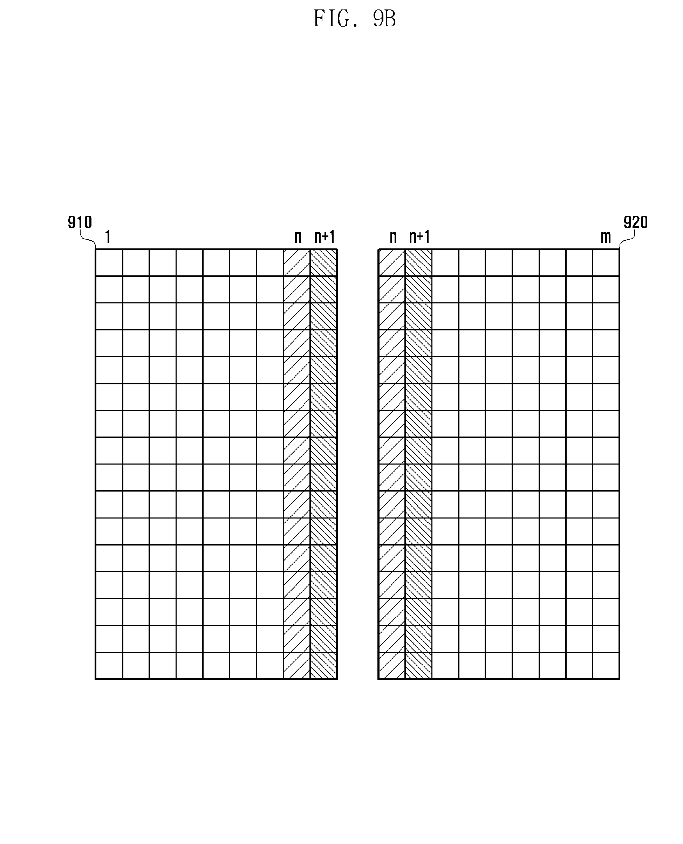

If the capture request is detected in this state, the control unit 100 selects a frame image capable of compensating for the shutter lag among the frame images buffered in the buffer 240. At this time, the selected frame image can be structured as shown in FIG. 9a. FIG. 9a shows an exemplary frame image having the size of m*y with the assumption of m=2n and y=2x. With the configuration of FIG. 8, the image processor segments the frame image read out of the buffer 240 into blocks having a predetermined size, post-processing the segmented frame images (tiler images), combining the segmented images (tiler images) into a frame image. The reason why post-processing the frame image as segmented is to decrease the number of gates of the postprocessor 250 and thus reduce the hardware complexity and power consumption. At this time, if the frame image of FIG. 9a is segmented into two blocks, the controller 100 reads the segmented images as denoted by reference number 910 and 920 of FIG. 9b.

Firstly, a description is made of the post-processing operation with a frame image segmented into two blocks. In the case that frame image having a size as shown in FIG. 9a is segmented into two blocks, the each block has the size of n*y (one block is composed of lines (1)-(n), and the other block is composed of the lines (n+1)-(m). By taking notice that the color interpolation and IPC processing to be performed with the adjacent pixels in preprocessing the frame image, the image is divided into one block of (1)-(n+a) and the other block (n-a+1)-(m) as denoted by reference number 910 and 920 of FIG. 9b ('a' varies depending on the processing type of the postprocessor). 'a' denotes the number of overlapping lines and is set to 1 (a=1) herein. The controller 100 reads the block 910 of FIG. 9b to be supplied to the postprocessor 250, and the postprocessor 250 post-processes segmented block to be supplied to the combiner 810. Afterward, the controller 100 reads the block 920 of FIG. 9b to be supplied to the postprocessor 250, and the postprocessor 250 post-processes the segmented block to be supplied to the combiner 810. At this time, the segmented image blocks include adjacent pixels to use the information on the adjacent pixels in the post-processing (pixels of the line n+1 in case of the block 910 of FIG. 9b and pixels of the line n in case of the block 920 of FIG. 9b) such that the segmented image blocks have to be combined after removing the pixels of the overlapping lines. Accordingly, the combiner 810 removes the pixels of the line n+1 for the post-processed block 910 of FIG. 9b and the pixels of the line n for the post-processed block 920 of FIG. 9b and combines the overlapping pixels-removed blocks to regenerate the frame image. Afterward, the frame image output by the combiner 810 is supplied to the still image codec 260 which encodes the frame image compressively into a still image to be stored in the storage unit 120 as a capture image.

Secondly, a description is made of the post-processing operation with a frame image segmented into four blocks. In the case that the frame image having a size as shown in FIG. 9a is segmented into four blocks, each of the four segmented block has a size of n*x, and the four segmented blocks can be expressed as {(1)-(n), (1)-(x); {(n+1)-(m), (1)-(x); (1)-(n), (x+1)-(y); {(n+1)-(m), (x+1)-(y)}.

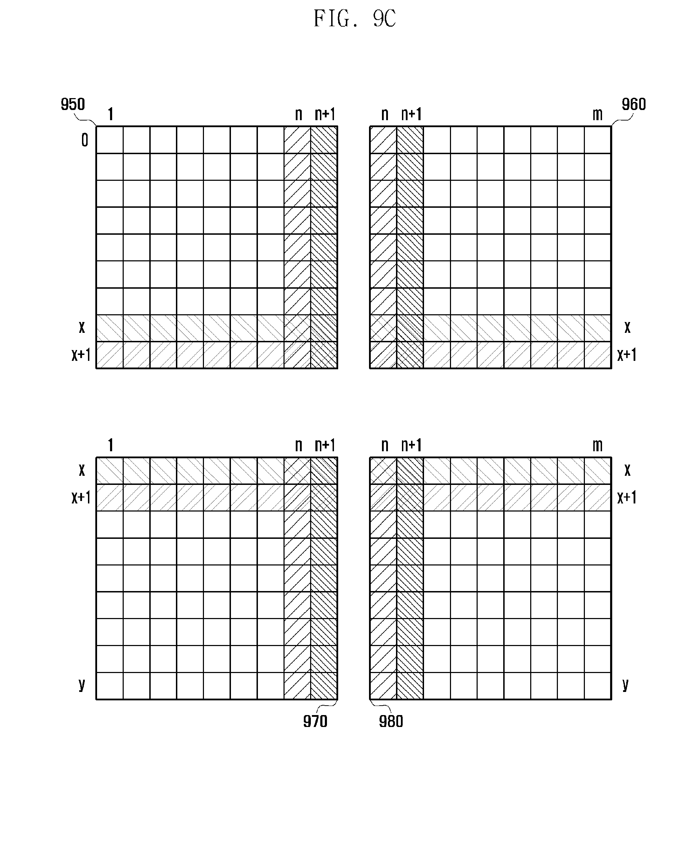

By taking notice that the color interpolation and IPC processing to be performed with the adjacent pixels in preprocessing the frame image, the image is divided into the blocks {(1)-(n+1), (1)-(x+1); {(n)-(m), (1)-(x+1); (1)-(n+1), (x)-(y); {(n)-(m), (x)-(y)} as denoted by reference numbers 950 to 980 of FIG. 9c. Afterward, the controller 100 reads the block 950 of FIG. 9c to be supplied to the postprocessor 250, and the postprocessor 250 post-processes the segmented image block to be supplied to the combiner 810. In the same manner, the controller 100 reads the segmented blocks 960 to 980 of FIG. 9c to be supplied to the postprocessor 250 sequentially, and the postprocessor 250 post-processes the segmented blocks to be supplied to the combiner 810 in sequence. At this time, the segmented image blocks include adjacent pixels to use the information on the adjacent pixels in the post-processing (pixels of the lines n+1 and x+1 in case of the block 950 of FIG. 9c, pixels of the lines n and x+1 in case of the block 960 of FIG. 9c, pixels of the lines n and x+1 of the block 970 of FIG. 9c, and pixels of the lines n and x of the block 980 of FIG. 9c) such that the segmented image blocks have to be combined after removing the pixels of the overlapping lines. Accordingly, the combiner 810 removes the pixels of the adjacent lines for the post-processed blocks 950 to 980 of FIG. 9c and combines the overlapping pixels-removed blocks to regenerate the frame image. Afterward, the frame image output by the combiner 810 is supplied to the still image codec 260 which encodes the frame image compressively into a still image to be stored in the storage unit 120 as a capture image.

As described above, the postprocessor 250 processes the frame image by 1/2 size for the case of segmenting a frame image into two blocks as shown in FIG. 9b and by 1/4 size for the case of segmenting a frame image into 4 blocks as shown in FIG. 9c. By processing the full resolution image as segmented into a predetermined number of blocks, it is possible to decrease the number of logic gates of the postprocessor 250 of the capture image processor and thus reduce the power consumption.

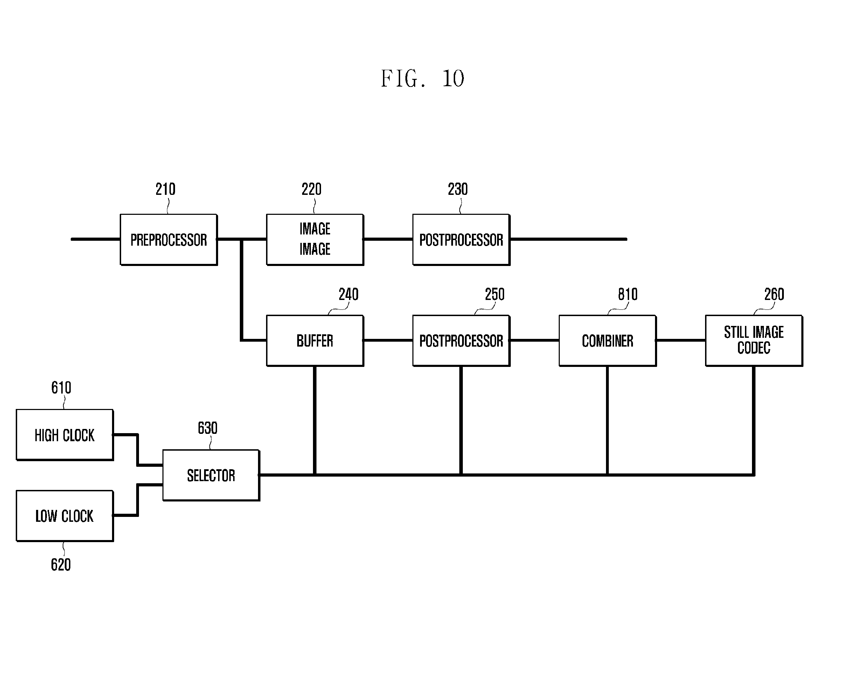

FIG. 10 illustrates the configuration of the image processor 200 of FIG. 1 according to another embodiment of the present disclosure. FIG. 10 shows an exemplary configuration of the image processor 200 capable of adjusting the frame rate selectively, processing the frame image as in the form of multiple segmented blocks, and combining the processed blocks into a capture image.

Referring to FIG. 10, the preprocessor 210 preprocesses the full resolution image acquired by the camera 110. The preprocessed image is supplied to the image scaler 220 to be scaled into the size and/or pixel numbers of the viewing image. Here, the image scaler 220 can be composed of a resizer 310 and/or averaging unit 320. The postprocessor 230 performs color interpolation, IPC processing, and image conversion on the image scaled by the image scaler 220 to generate a YUV viewing image to the display unit 130. The configuration and operations for processing the viewing image can be implemented as shown in FIGs. 2 and 3.

In the preview mode, the preprocessor 210 buffers the full resolution images in the buffer 240. In the preview mode, the postprocessor 250 and the still image codec 260 are not operating to save the power.

The clock generation unit includes a high clock generator 610 generating a clock speed equal to that of the operation clock of the preview/movie ISP and a low clock generator 620 generating a clock speed lower than the high clock speed to provide the operation clock of the capture image processor selectively under the control of the controller 110. Here, the buffer 240 operates at the frame rate of the preview/movie ISP. That is, the buffer 240 buffers the frame images processed by the image processor 200 at the frame rate (e.g. 30 fps) at every frame period. The operation clock of the capture image processor is selected by the user and has a clock speed equal to or lower than that of the viewing image processor. Here, it is assumed that the high clock speed is the clock speed capable of processing images at the frame rate of 30fps, and the low clock speed is the clock speed capable of processing the images at the frame rate of 15fps.

If a capture request is input in this state, the controller 100 selects a frame image capable of compensating for the shutter lag among the frame image buffered in the buffer 240. The selected frame image can be structured as shown in FIG. 9a. If the capture request is detected, the controller 100 reads the frame images as segmented into predetermined-size blocks, and the segmented images output from the buffer is post-processed by the postprocessor 250 and then combined by the combiner 810 into a frame image. The frame image generated by the combiner 810 is encoded by the still image codec 260 and then stored in the storage unit 120 as a capture image.

The capture image is processed at clock of which clock speed lower than that of the preview/movie ISP and thus it is possible to reduce the electric current consumption. Furthermore, the frame image is processed as segmented into small blocks and thus it is possible to decrease the number of gates of the postprocessor 250 of the capture image processor, resulting in reduction of hardware complexity and power consumption.

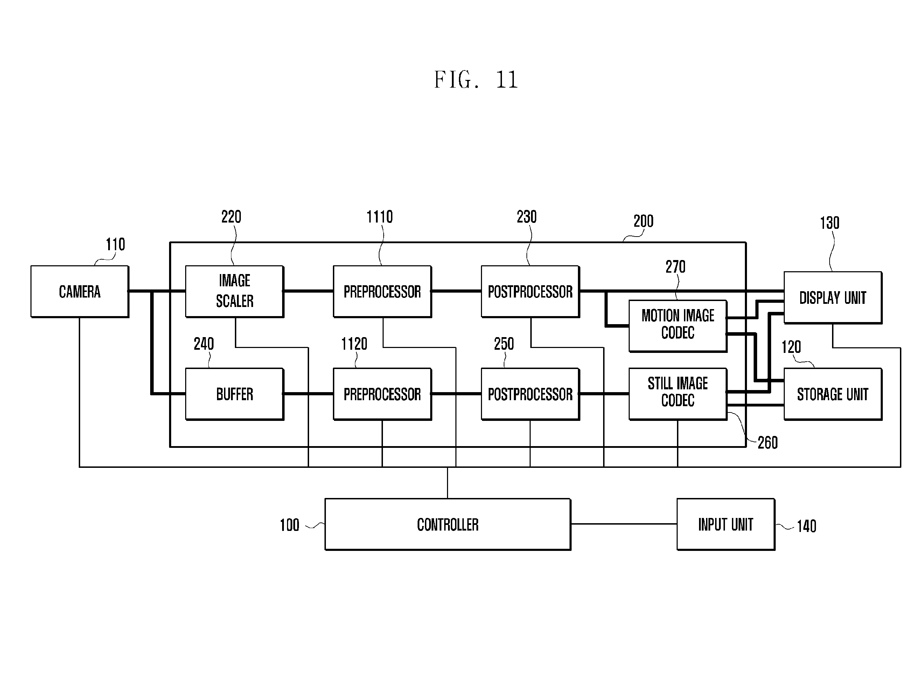

FIG. 11 illustrates the configuration of the camera device according to another embodiment of the present disclosure.

Referring to FIG. 11, the camera 110 is responsible for acquiring image by means of a sensor in operation mode. The camera 100 is provided with an optical unit, an image sensor, and a signal processor. The configuration and operations of the camera 110 can be implemented as described with reference to FIG. 1.

In FIG. 11, the image processor 200 includes a controller, a preview/movie ISP, and a still capture ISP. The image processor 200 of FIG. 11 is **characterized in that** the preprocessor includes the preview/movie ISP and the capture image processor.

Firstly, a description is made of the configuration of the preview/movie ISP. The image scaler 220 is responsible for adjusting the full resolution image output by the camera 110 into the size of the image to be displayed on the screen of the display unit 130 and/or the size to be stored in the motion image format. The preprocessor 1110 preprocesses the viewing image output by the image scaler 220. Here, the preprocessing operations can include 3A (i.e. Auto White Balance (AWB), Auto Exposure (AE), and Auto Focusing (AF)) extraction and processing, lens shading correction, dead pixel correction, knee compensation, etc. The postprocessor 230 performs color interpolation, noise reduction, color correction, and image conversion on the scaled Bayer data to generate the YUV data. The image output by the postprocessor 230 is the YUV data scaled to be fit for the screen size of the display unit 130.

The viewing image can be used for motion image to be stored. In this case, if a motion image shot request, the motion image codec 270 encodes the viewing image to store the encoded image in the storage unit 120. Here, the viewing image can be equal to or greater than the preview mode viewing image in size or number of pixels. In this case, the image scaler 220 is capable of including the preview mode scaler and the motion image mode scaler or configuring the scaling rate depending on the mode control. In this case, if the motion image record request is input, the control unit 100 controls the image scaler 220 to scale the image to the size of motion image such that the image scaler 220 scales the full resolution image output by the camera 110 to the motion image size. Here, the motion image can be encoded in one of various motion image formats such as H.264.

Secondly, a description is made of the configuration of the capture image processing unit. The buffer 240 buffers the camera's full resolution images output by the preprocessor 210. Here, the buffer 240 is configured to have a size large enough to storing the frame images with which the shutter lag of the camera device can be compensated. In an embodiment of the present disclosure, the buffer 240 is structured in the form of a ring buffer having a size equal to or less than 5 frame images. The buffer 240 buffers the full resolution image output by the camera at every frame, and the controller 100 selects a frame image capable of compensating for the zero shutter lag from the buffer 240 and supplies the selected frame image to the preprocessor 1120 in response to a capture request. The preprocessor 1120 preprocesses the full resolution image selected from the buffer 240 in the same manner as the preprocessor 1110. The postprocessor 250 performs color interpolation, noise reduction, color correction, and image conversion on the full resolution image output by the preprocessor 1120 to generate the YUV data. The still image codec 260 encodes the full resolution image output by the postprocessor 250 compressively. The capture image encoded by the still image codec 260 is stored in the storage unit 120.

The storage unit 120 is a memory for storing the images taken by the camera device; and although the description is directed to the case where it stores the still images in an embodiment of the present disclosure, the storage unit 120 is also capable of storing motion images. The display unit 130 is a display device implemented with LCD or LED for displaying images taken by the camera device and shooting information. The input unit 140 is capable of including a plurality of buttons for configuring functions and generating commands for executing operations. Here, the buttons of the input unit 140 can include keys arranged on the body of the camera device and virtual keys provided on a touch panel. In this case, some buttons provided by the display unit 130 and the input unit 140 can be presented on a touchscreen.

The camera device structured as shown in FIG. 11 is provided with the preprocessors 1110 and 1120 for processing the respective viewing image and capture image, the preprocessors 1110 and 1120 being configured to process the viewing and capture images appropriately. At this time, the viewing image processing unit is operating in the camera operation mode while the capture image processing unit is activated only when a capture request is input. In FIG. 11, the preprocessor 1110 preprocesses the image scaled to the viewing image size in the camera operation mode, and the preprocessor 1120 is activated in response to the capture request to preprocess the camera's full resolution image, thereby performing preprocessing operations efficiently.

A description is made of the operation of the above-structured camera device. If the user input a camera driving command through the input unit 140, the controller 100 drives the camera 110. The image output by the camera 110, which can be a Bayer image of camera's full resolution, is input to the image scaler 220. The image scaler 220 scales the full resolution image to the size fit for the display unit 130 at every frame period under the control of the controller 100.

Here, the image scaling can be performed with at least one of resizing, decimation, interpolation, crop, addition, and averaging. The preprocessor 1110 preprocesses the scaled viewing image. That is, the preprocessor 1110 can be configured with a size capable of processing the viewing image. The preprocessed viewing image is post-processed by the postprocessor 230. The post-processing can be performed with color interpolation, noise reduction, gamma correction, and image conversion. That is, the postprocessor performs color interpolation on the pixel data to generate RGB data, reducing noise of the interpolated pixel data, and converts the noise-reduced data to YUV data. The viewing image post-processed as above is displayed on the screen of the display unit 130.

The buffer 240 buffers the camera's full resolution image at every frame period. The buffer 240 has a ring buffer structure so as to buffer a predetermined number of frame images. In the preview mode, while the controller 100 controls the buffer 240 to buffer the high resolution frame image generated at every frame period, the preprocessor 1120, the postprocessor 250, and the still image codec 260 are not operating. In an embodiment of the present disclosure, the camera device processes every frame image acquired by the camera 110 to generate the viewing image to be display on the screen of the display unit 130 by means of the image scaler 220, preprocessor 1110, and postprocessor 230 of the viewing image processing unit while the buffer 240 is buffering the full resolution images in the preview mode. That is, the image processor 200 operates to generate and display the viewing image but not perform any processing operation for storing image. At this time, the viewing image is preprocessed, post-processed, and image-converted in the state of being scaled down to a small size image while the high resolution images, as candidates to be captured, are being just buffered, thereby reducing the power consumption and heat.

In the preview mode, if a capture request is input through the input unit 140, the controller 100 drives the preprocessor 1120, the postprocessor 250, and the still image codec 260. If a shutter press is detected, the controller 100 detects the shutter press time, selects the frame image capable of compensating for the shutter lag among the images buffered in the buffer 240, and supplies the selected image to the preprocessor 1120. The preprocessor 1120 preprocesses only the image to be captured, and the preprocessed image is post-processed by the postprocessor 250 and encoded by the still image codec 260 so as to be stored in the storage unit 120 as a capture image. This means that the preprocessing, post-processing, and encoding operations are performed only when the capture request is input.

Although the description is directed to the case that the capture image is acquired from the camera's full resolution image, the full resolution image can be scaled if necessary. That is, the user of the camera device may capture the still image smaller than the full resolution image in size (or resolution). In this case, an image scaler different form the image scaler 220 can be arranged at the output end of the buffer 240 such that the output of the buffer 240 is supplied to the image scaler.

As described above, the camera device according to an embodiment of the present disclosure is capable of achieving zero shutter lag. In an embodiment of the present disclosure, the camera device processes one of the frame images buffered in the buffer 240 to generate a capture image in response to the capture request in order to compensate for the shutter of the camera device.

The picture to be captured in response to the user's capture request may not be taken normally. In an exemplary case of taking a portrait picture, the picture model may close eyes or the camera may be shaken. In this case, it is preferred to capture another frame image. According to an embodiment of the present disclosure, the user is capable of replacing an unwanted frame image, if necessary, with another frame image selected among the predetermined number of buffered frame images.

If a still image playback request is input through the input unit 140 in the above state, the controller 100 accesses the requested still image from the storage unit 120 and the still image codec 260 decodes the accessed still image to display the decoded still image on the screen of the display unit 130. If a motion image playback request is input through input unit 140, the controller 100 accesses the requested motion image in the storage unit 120 and supplies the accessed motion image to the motion image codec 270 such that the motion image codec 270 decodes the motion image to play on the screen of the display unit 130.

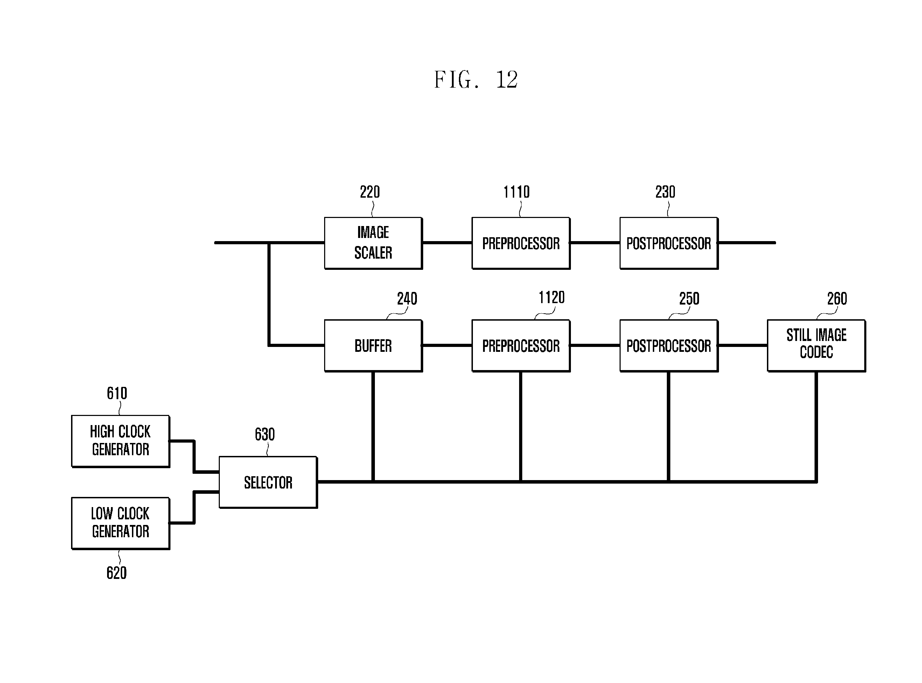

FIG. 12 illustrates the configuration of the image processor of the camera device of FIG. 11 according to an embodiment of the present disclosure. FIG. 12 shows an exemplary configuration of the image processor capable of adjusting frame rate selectively in generating a capture image.

Referring to FIG. 12, the image processor further includes a high clock generator 610 and a low clock generator 620 in addition to the configuration of FIG. 11 and controls the selector 630 to select the operation clock of the capture image processor under the control of the controller 100. That is, the image processor of the camera device which is configured as shown in FIG. 12 is capable of selecting the operation clock of the image processor according to the user's selection. The image processor operates in the same manner as the image processor of FIG. 11, and the clock selector is capable of operating in the same manner as the selectors of FIGs. 6 and 7.

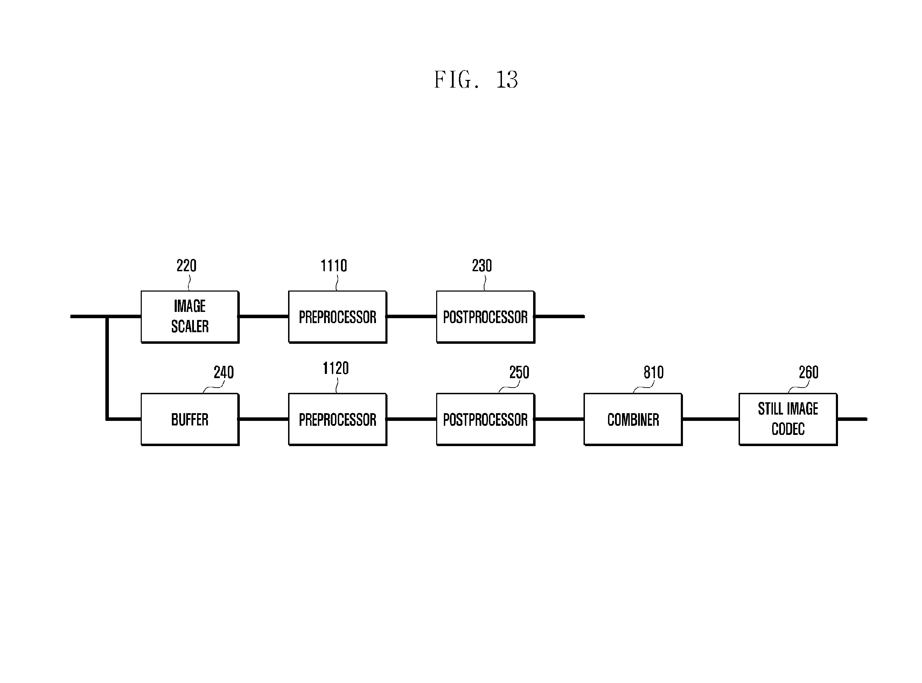

FIG. 13 illustrates the configuration of the image processor of the camera device structured in FIG. 11. FIG. 13 shows an exemplary configuration for generating a capture image in such a way that the image processor processes the frame image in the form of segmented blocks and then combines the processed blocks into the capture image.

The image process structured as shown in FIG. 13 includes a combiner 810 in addition to the configuration of FIG. 11, and the controller 100 performs preprocessing and post-processing on the frame image in the segmented state as shown in FIGs. 9a to 9c and then combines the processed segments into the frame image. At this time, the image processor operates in the same manner as described with reference to FIG. 11, and the segmented image blocks are processed in the same manner as described with reference to FIGs. 8 and 9a to 9c.

In the above-structured camera device, the capture image can be stored in the state of storing a motion image. That is, the viewing image is the image capable of being stored as motion image and, in the motion image record mode, the above-structured image processing apparatus generates the viewing image at every frame period. As described above, the viewing image can be stored in the format of motion image. In the motion image recording mode, the image processing apparatus displays the viewing image on the screen of the display unit 130 and encodes the viewing image by means of the motion image codec 270 to store the coded image in the storage unit 120 simultaneously at every frame. If a capture quest command is input in this state, the image processing apparatus generates the viewing image while encoding the frame image of zero shutter lag. The image processing apparatus displays the viewing image on the screen of the display unit 130 and encodes the viewing image by means of the motion image codec 270 to store the encoded image as capture image in the storage unit 130 simultaneously. Accordingly, it is also possible to take a snap shot while shooting a motion image.

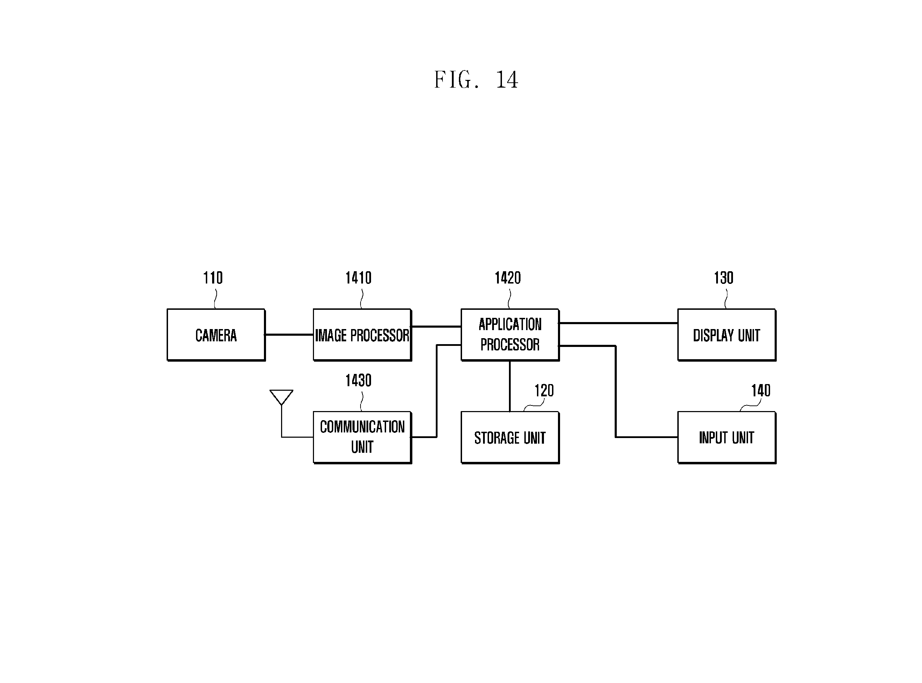

FIG. 14 illustrates the configuration of the camera device according to another embodiment of the present disclosure.

Referring to FIG. 14, the camera 110 is responsible for acquiring images by means of an image sensor in the camera operation mode.

The image processor 1410 processes the image acquired by the camera 110 to generates the viewing image to be displayed on the screen of the display unit 130 and the capture image to be stored in response to a capture request. Here, the viewing image can be a YUV image, and the capture image can be a JPEG image as encoded compressively. The image processor 1410 scales the image acquired by the camera 110 to be fit for the screen size of the display unit 130 and converts the image to a YUV image to be display on the screen of the display unit 130. The image processor 1410 buffers the camera's full resolution images and encodes the frame image capable of compensating for the shutter lag compressively at the shutter press time. Here, the capture image can be the image having the camera's full resolution. The image processor 1401 generates the viewing image and buffers the capture image at every frame period.

The application processor 1420 buffers the viewing images generated by the image processor 1410 in the camera operation mode, and the viewing images and capture images in response to the capture request. The application processor 1420 controls the display unit 130 to displays the buffered viewing image and controls the storage unit 120 to store the buffered capture image in response to the capture request.

The input unit 140 is capable of generating a camera driving command and a capture command to the application processor 1420. The display unit 130 displays the viewing image output by the application processor 1420 in the preview mode. Here, the input unit 130 can be a touch panel capable of sensing user's touch input, and the display unit 130 can be one of LCD and OLED panels for displaying data and image generated by the running programs. Here, the input unit 140 and the display unit 130 can be integrated into a touchscreen. The input unit 140 is capable of including buttons arranged outside of the camera device.

The storage unit 120 stores the capture image output by the application processor 1420 in response to the capture request.

In the case of the terminal apparatus equipped with a camera device, the application processor 140 is capable of including a communication unit 1430. In this case, the communication unit 1430 is capable of communication with an external device or a base station. The communication unit 1430 includes a transmitter having an up-converter for up-converting the frequency of the signal to be transmitted and a power amplifier for amplifying the transmission signal, a receiver having a low noise amplifier for low noise amplifying the received RF signal and down converter for down-converting the received RF signal to a base band signal, a modulator for modulating and transferring the transmission signal to the transmitter, and a demodulator for demodulating the received signal output by the receiver. Here, the modulator/demodulator capable of processing at least one of WCDMA, GSM, LTE, Wi-Fi, and WiBro signals. In the case that the communication is provided, the application processor 1420 can be configured with a mobile processor (MP) and an application processor.

A description is made of the configuration and operation of the application processor 1420 for processing the image acquired by the camera according to an embodiment of the present disclosure.

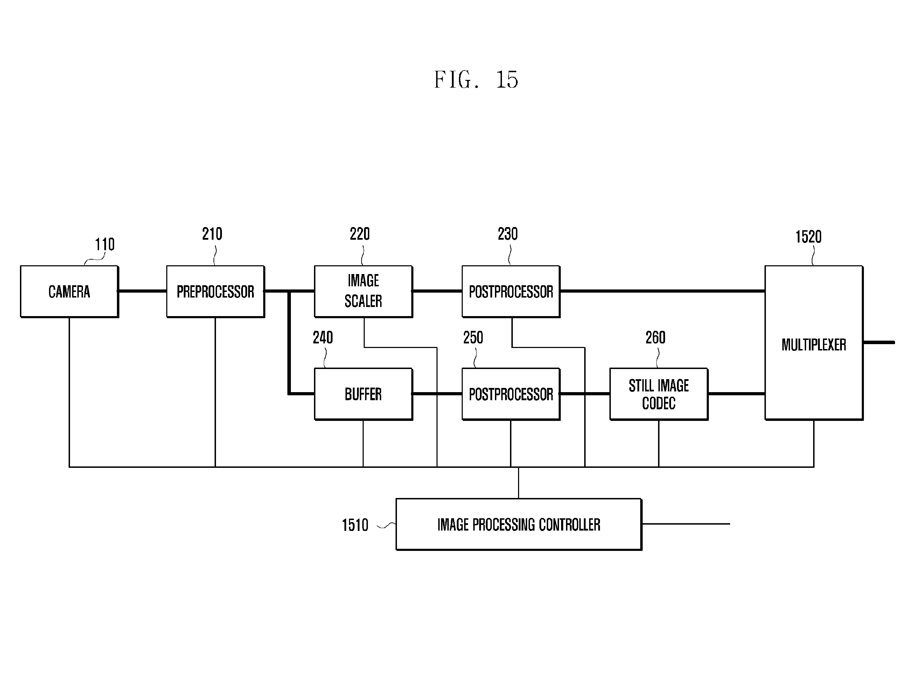

FIG. 15 illustrates the configuration of the image processor 1410 of FIG. 14.

Referring to FIG. 15, the image processing controller 1510 controls the operations of the image processor and the camera 110.

The preprocessor 210 performs the operations such as 3A (i.e. Auto White Balance (AWB), Auto Exposure (AE), and Auto Focusing (AF)) extraction and processing, lens shading correction, dead pixel correction, knee compensation, and the like. The image scaler 220 scales the preprocessed image to the viewing image size. The postprocessor 230 performs color interpolation, noise reduction, and image conversion on the Bayer data scaled to the viewing image size to generate YUV data.

The buffer 240 buffers the camera's full resolution images output by the preprocessor 210. Here, the buffer 240 is configured to have a size large enough to storing the frame images with which the shutter lag of the camera device can be compensated in the form of a ring buffer. The buffer 240 buffers the full resolution images output by the preprocessor 210 at every frame and access the image selected under the control by the image processing controller 1510 in response to a capture request. The postprocessor 250 perform color interpolation, noise reduction, color correction, and image conversion on the full resolution image selected from the buffer 240 to generate the YUV data. The still image codec 260 encodes the full resolution image output from the postprocessor 250 compressively.

The multiplexer 1520 multiplexes the outputs of the postprocessor 230 and the still image codec 260 under the control of the image processing controller 1510. A description is made of the operation of the above-structured image processor. In the preview mode, the image processing controller 1501 drives the camera 110 to acquire images. In the preview mode, the preprocessor 210 preprocesses every frame image, the image scaler 220 scales the preprocessed frame image to the viewing image, and the postprocessor 230 post-processes the viewing image to output YUV image. The buffer 240 buffers the camera's full resolution image output by the preprocessor 210. In the preview mode, the postprocessor 250 and the still image coded are not operating and thus the image output by the multiplexer 1520 is the viewing image.

If a capture request is input in this state, the image processing controller 1510 accesses the frame image capable of accomplishing zero shutter lag in the buffer, converts the accessed frame image to the YUV image by means of the postprocessor 250, and the still image codec 260 encodes the YUV image compressively to supply the compressed capture image to the multiplexer 1502. The multiplexer 1520 multiplexes the viewing image and the capture image. At this time, the capture image is a still image with zero shutter lag (camera's full resolution image) taken at the capture request timing.

The image scaler 220 of the image processor structured as shown in FIG. 15 can configured with the resizer and/or averaging unit as shown in FIG. 2, 3, or 5. The image processor structured as shown in FIG. 15 can be configured with multiple operation clocks as described with reference to FIG. 6, process the frame image in the form of segmented blocks as described with reference to FIG. 8, or process the frame image as segmented with multiple operation clocks as described with reference to FIG. 10. The image processor structured as shown in FIG. 15 is capable of including the viewing image processor, capture image processor, and processors 1110 and 1120 as described with reference to FIG. 11. In this case, the full resolution image output from the camera 110 is supplied to the image scaler 220 and the buffer 240, and the preprocessors 1110 and 1120 preprocess the viewing and capture images different from each other in size. At this time, the image scaler 220 can be implemented with the resizer and/or averaging unit as described above. In the case that the preprocessors 1110 and 1120 are configured independently, the image processor structured as shown in FIG. 15 is capable of operating with multiple operation clocks, processing the frame image as segmented as shown in FIG. 13, generating the capture image with multiple operation clock and segmented frame image blocks.

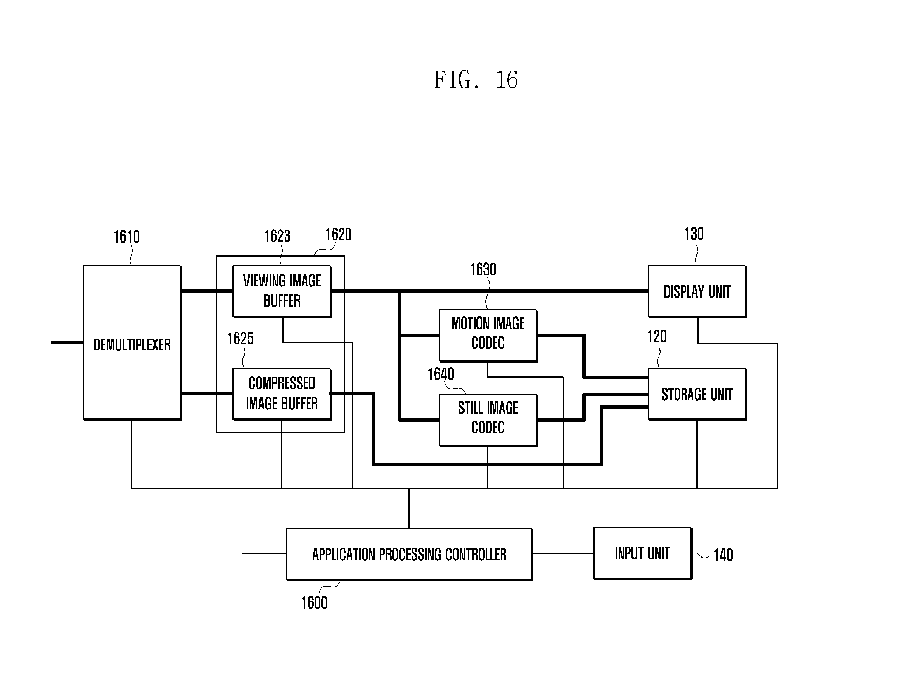

FIG. 16 illustrates the configuration of the application processor 1420 of FIG. 14. The application processor 1420 of FIG. 14 is configured with the function blocks of processing the image output form the image processor structured as shown in FIG. 16. However, the application processor 1420 is also capable of being configured to perform radio communication with external communication network by means of the communication unit 1430. In the following, the description is directed to the operation of processing the image taken by the camera 110.

Referring to FIG. 16, the application processing controller 1600 controls the operation of the image processor 1410 according to the command input through the input unit 140, buffers the image output by the image processor 1410, displays the image on the screen of the display unit 130, and stores the buffered capture image in the storage unit 120 in response to the capture command. The demultiplexer 1610 demultiplexes the output of the image processor into the viewing image or the viewing and capture images. The buffer 1620 buffers the viewing image or the viewing and capture images and compressed image under the control of the application processing controller 1600.

The application processor 1420 includes the motion image codec 1630 for compressing the video data in response to the motion image recording request, and the motion image codec 1630 can be implemented with one of various motion image encoders such as H.264 encoder.

The application processor 1420 is also capable of including a still image codec 1640.

A description is made of the operation of the application processor 1410. If the user input s camera drive command by means of the input unit 140, the application processing controller 1600 notifies the image processor 1410 of this such that the image processing controller 1510 drives the camera 110. The image processor 1410 converts the image output by the camera 110 to the viewing image and buffers the camera's full resolution image. That is, the image processor 1410 outputs only the viewing image. The application processor 1420 buffers the viewing images in the viewing image buffer 1623, and the application processing controller 1600 displays the buffered viewing image on the screen of the display unit 130.

In the preview mode, if a capture request is input, the application processing controller 1600 notifies the image processing controller 1510 of this. The image processing controller 1510 accesses the frame image capable of accomplishing zero shutter lag among the frame images buffered in the buffer 240, and the image processor 1410 converts the accessed frame image to the YUV image and encodes the YUV image compressively. The image processor 1410 multiplexes the viewing image and the capture image by means of the multiplexer 1520. The image processor 1410 multiplexes the viewing and capture images to output the multiplexed data only when the capture image is requested and, in other frame durations, outputs just viewing image. The application processor 1510 demultiplexes the multiplexed result into the viewing and capture images by means of the demultiplexer 1610 and buffers the demultiplexed viewing and capture images in the respective viewing image buffer 1623 and compressed image buffer 1625. The application processor 1420 displays the buffered viewing image on the screen of the display unit and stores the buffered capture image in the storage unit 120.

In the above-structured camera device, the capture image can be stored even when the motion image is being stored. That is, the viewing image is the image that can be stored in a motion image format and, in the motion image recording mode, the image processor 1410 generates the viewing image to the application processor 1420 at every frame period. The application processor 1420 displays the viewing image being buffered in the viewing image buffer 1623 and encodes the viewing image by means of the motion image codec 1630 to store the compressed image in the storage unit 120. If a capture request command is input in this state, the image processor 1410 encodes the frame image capable of achieving zero shutter lag along with the viewing image. The application processor 1420 displays the viewing image buffered in the viewing image buffer 1623 on the screen of the display unit 130 and encodes the viewing image by means of the motion image codec 1630 to store the encoded image simultaneously while storing the capture image buffered in the compressed image buffer 1625 in the storage unit 120.

According to an embodiment of the present disclosure, the camera device is provided with a viewing image processor for the preview/motion image and a capture image processor to solve the electric current consumption and overheat problems. Here, the camera 110 generates the full resolution image to the viewing image processor and the capture image processor simultaneously. The viewing image processor scales the full resolution image to the viewing image at ever frame period, processes the scaled viewing image to be fit for the color format of the display unit 130, and displays the processing image on the screen of the display unit 130.

The full resolution image generated by the camera 110 is buffered in the buffer 240 for use in outputting the frame image capable of achieving zero shutter lag in response to the capture request. Here, the buffer 240 can be configured in a ring buffer structure capable of storing the full frame image at every frame period. The frame images are buffered for selecting a frame image synchronized with the shutter press time or shooting timing (i.e. frame image capable of achieving zero shutter lag) in response to the shooting request. The frame images buffered in the buffer 240 are also capable of being used in the continuous shooting. That is, if the user requests the continuous shooting (e.g. continuous shot mode or burst shot mode), the controller 100 accesses the frame images buffered in the buffer 240 sequentially, and the still capture ISP processes and encodes the accessed images to store the compressed images in the storage unit 120. The viewing image processed by the viewing image processor can be used for storing a motion image and, in the motion image recording mode, the capture image processor is capable of generating and storing the still image in response to the capture request (video snap shot).

The processing speed of the capture image processor can be equal to or different from that of the viewing image processor. In this case, a low clock generator and a high clock generator can be provided so as to process the image at the same frame rate (e.g. 30 fps) as the viewing image processor or at a frame late (e.g. 15 fps) lower than that of the viewing image processor.

The still capture ISP is capable of segmenting the capture image into blocks having a predetermined size, processing the blocks in sequence, and combining the processed blocks to regenerate the frame image. In this case, the capture image processor can be simplified in structure (reduced number of gates).

The capture image processor according to an embodiment of the present disclosure performs only the operation of buffering images at every frame period but no other operation with the exception of the time when the capture request is input, thereby reducing unnecessary electric current consumption. The buffered image is the full resolution Bayer data that can be processed, if necessary, with other image processing algorithm. By processing the viewing and capture image according to the above described method, it is possible to achieve zero shutter lag and reduce unnecessary electric current consumption.

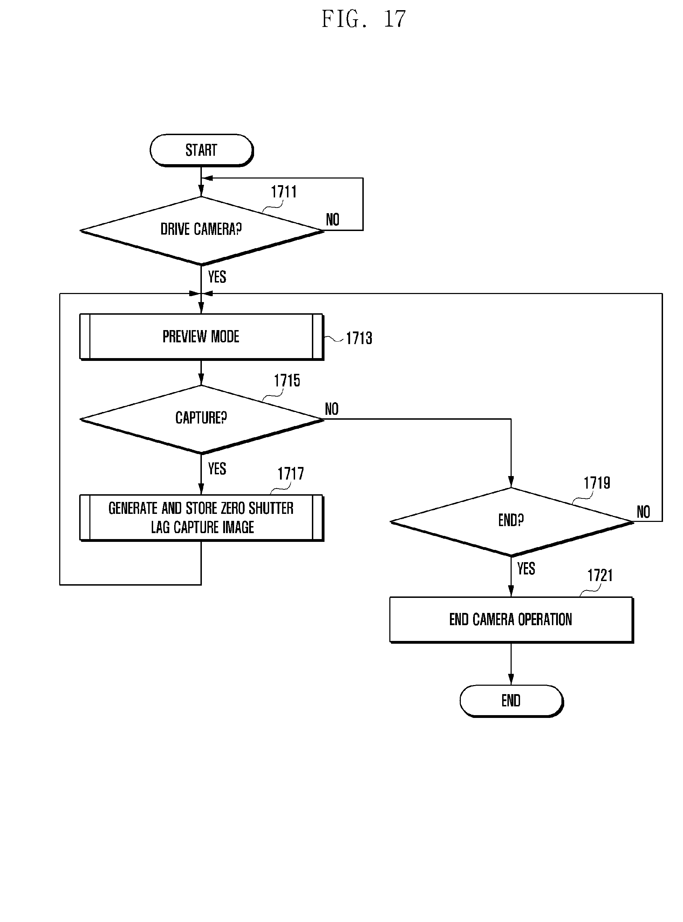

FIG. 17 illustrates an image processing method of the camera device or camera-equipped terminal device according to an embodiment of the present disclosure. The camera device can be structured in the same configuration as FIG. 1 or 11. In the following, the description is directed to the camera device configured as shown in FIG. 1.

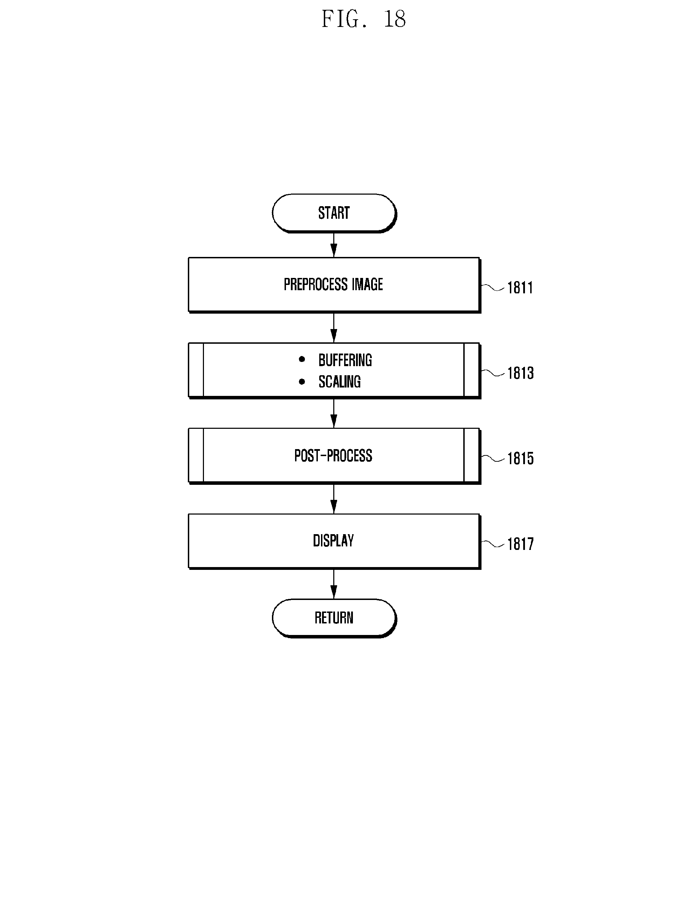

Referring to FIG 17, if a camera drive command is input through the input unit 140, the controller 110 drives the camera 110 at step 1711 and executes the preview mode at step 1713. In the preview mode, the controller 100 processes the images through the procedure as shown in FIG. 11. FIG. 18 is a flowchart illustrating the preview mode image processing procedure of the camera device according to an embodiment of the present disclosure.

Referring to FIG. 18, the controller 100 preprocesses the full resolution image acquired by the camera 110 at step 1811. At this time, the preprocessing is of processing the image acquired by the camera 110 as described above. The preprocessing can include 3A (i.e. Auto White Balance (AWB), Auto Exposure (AE), and Auto Focusing (AF)) extraction and processing, lens shading correction, dead pixel correction, knee compensation, etc.

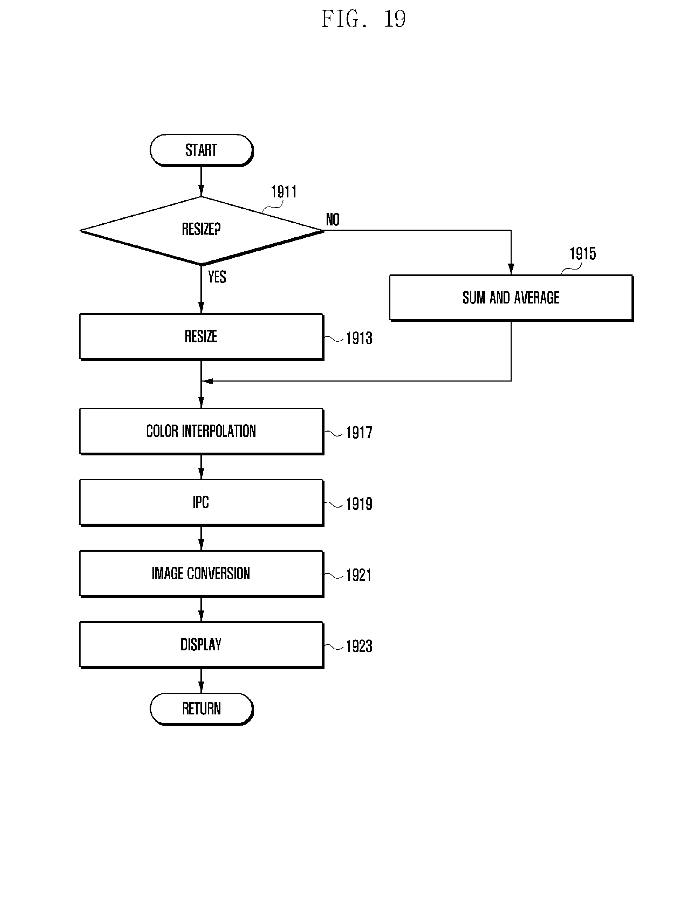

Afterward, the controller 100 scales the preprocessed full resolution image to a viewing image buffers the preprocessed full resolution image simultaneously at step 1813. Next, the controller 100 post-processes the scaled viewing image at step 1815 and displays the post-processed image on the screen of the display unit 130 at step 1817. FIG. 19 is a flowchart illustrating details of the preview image generation and display step of FIG. 18.

Referring to FIG. 19, the image scaling according to an embodiment of the present disclosure can be performed in such a way of resizing or averaging operation. In the case that the image scaler is implemented with a resizer, the controller 100 detects this at step 1911 and scales the full resolution image to a viewing image through the resizing operation at step 1913. At this time, the controller 100 is capable of performing decimation, interpolation, and crop on the full resolution image to generate the viewing image at step 1913. In the case that the image scaler is implemented with an average unit, the controller 100 detects this at step 1911 and performs summing and averaging on the adjacent pixels to reduce the number of pixels of the full resolution image. At this time, the averaging operation can be performed as described with reference to FIGs. 4a and 4b.

After completing the image scaling operation, the controller 100 performs the post-processing operation to generate the viewing image through steps 1917 to 1921. As aforementioned, the post-processing operation can include the color interpolation, IPC processing, and image conversion. Next, the controller 100 displays the YUV viewing image on the screen of the display unit 130 at step 1923.

In the preview mode, the controller 100 scales the camera's full resolution image to the viewing image size, post-processes the scaled image, and displays the post-processed image on the screen of the display unit 130 through the procedure of FIG. 19 while buffering the full resolution image at step 1713.

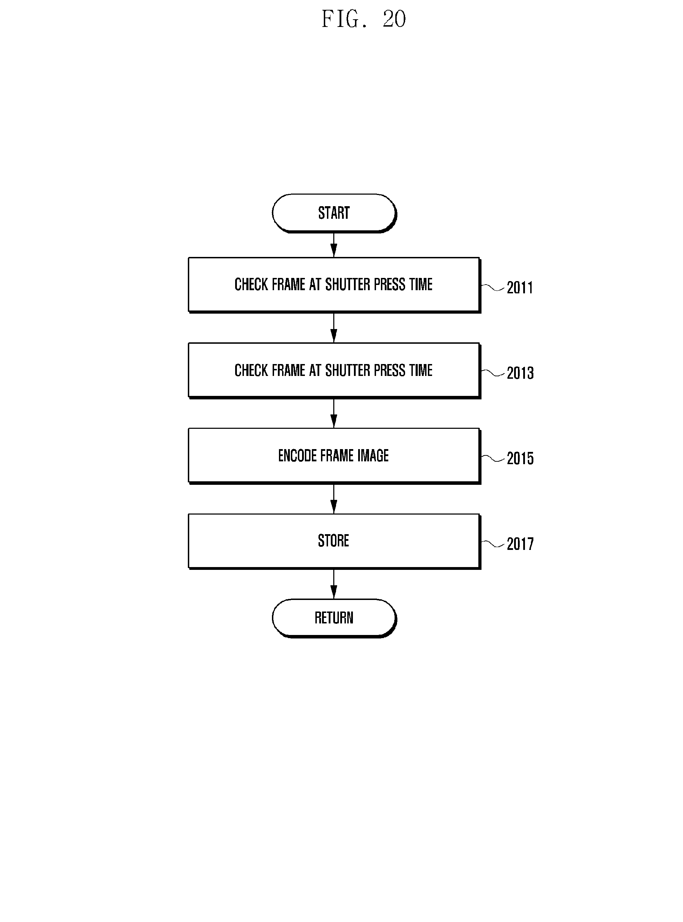

If a capture request is input at this state, the controller 100 detects this at step 1715 and selects the full resolution image capable of achieving zero shutter lag among the buffered full resolution images and stores the selected image at step 1715. FIG. 20 is a flowchart illustrating details of the capture image generation step of FIG. 17.

Referring to FIG. 20, if a capture request is input, the controller 100 checks the frame image capable of achieving zero shutter lag among the images buffered in the buffer 240 at step 2011, post-processes the selected frame image at step 2013, encodes the post-processed image at step 2015, and stores the encoded image in the storage unit 120 at step 2017. At this time, post-processing can be performed in the same manner as post-processing the viewing image, and the image to be post-processed can be the full resolution image of the camera 100.

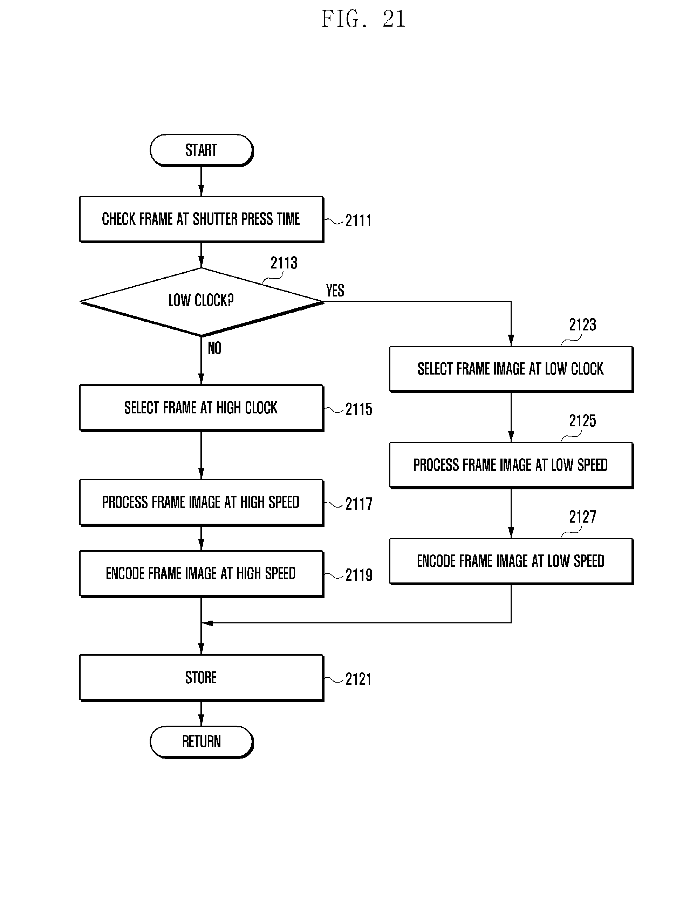

At this time, the capture image processing can be performed at low speed other that at every frame as in the viewing image processing operation. The reason for reducing the frame rate is, since the capture image is a camera's full resolution image, to simplify the image processing complexity of the camera device and reduce the electric current consumption in capture image processing. FIG. 21 illustrates the capture image processing at a speed selected by the user between the high and low processing speeds which is applicable in FIG. 20.

Referring to FIG. 21, if a capture request is input, the controller 100 checks the frame image taken at the shutter press time (i.e. zero shutter lag image) at step 2111. Next, the controller 100 determines whether the clock selected by the user is the high clock or the low clock at step 2113 and, if the selected clock is the high clock, selects a frame image, processes the selected image, and encodes the processed image through steps 2115 to 2119. At this time, the high clock has the clock speed capable of processing the images at every frame period (e.g. clock capable of processing the images at 30 fps). Next, the controller 110 stores the capture image processed at the high clock speed in the storage unit120 at step 2121. In the case of processing the capture image at the high clock speed, the controller 100 is capable of storing the frame image capable of achieving zero shutter lag as the capture image in response to the capture request.

Otherwise if the selected clock is the low clock, the controller 100 detects this at step 2113, selects the frame image capable achieving zero shutter lag, processes the selected image, and encodes the processed image at low clock speed through steps 2123 to 2127. FIG. 7 shows an example of low frame late which 1/2 (15 fps) of viewing image frame rate. In the case of generating the capture image at the low clock speed, the capture image can be processed at every two frames period. The capture image generated in this way is stored in the storage unit 120 at step 2121.

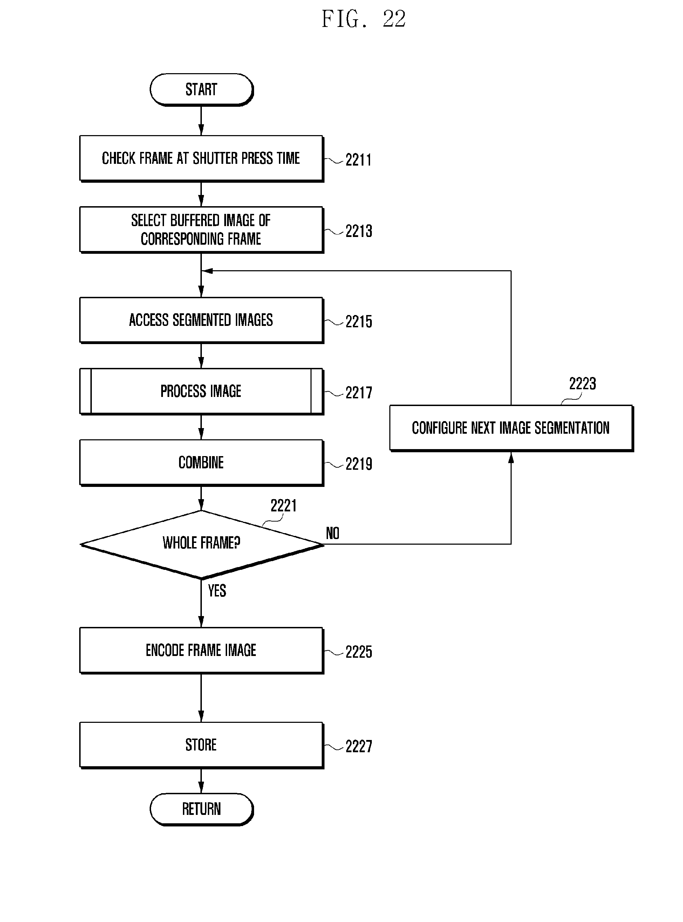

The capture image can be processed as segmented in the procedure of FIG. 20. Since the capture image should be acquired from the camera's full resolution image, the post-processor 250 has to be configured with a memory size larger than that of the postprocessor 230 processing viewing images. In this case, the, as the structure of the postprocessor 250 becomes more complex, the electric current consumption increases. Accordingly, it can be efficient to processing the image in such a way of segmenting the capture image into blocks of predetermined size and configuring the postprocessor 250 with the size capable of processing the image in unit of segmented block and combining the blocks after being post-processed. FIG. 22 is a flowchart illustrating the process of segmenting a capture image, processing the segmented image blocks, and combining the processed block to generate the frame image in the capture image procedure of FIG. 20.

Referring to FIG. 22, if a capture request is input, the controller 100 checks the frame image taken at the shutter process time (i.e. zero shutter lag image) at step 2211 and selects the corresponding frame image from the buffer 240. Next, the controller 100 segments the selected images into blocks having a predetermined size at step 2215 and post-processes the blocks in sequence at step 2217. At this time, the frame image can be segmented as shown in FIGs. 9a to 9c. The post-processed image block are combined with the previously processed image block and, if the frame image processing is not completed (i.e. if there is further image block to be processed), the controller 100 detects this at step 2221 and selects the next image block to be accessed at step 2223, and returns the procedure to step 2215. This process is repeated until all segmented image blocks are processed to generate one frame and, if the frame image is generated, the controller 100 detects this at step 2221, encodes the frame image at step 2225, and stores the encoded frame image in the storage unit 120 at step 2217.

In the case of processing the capture image as shown in FIGs. 20 to 22, the controller 100 performs the operation of generating and processing the viewing image to display the processed image on the screen at every frame period as described with reference to FIG. 18 and 19.

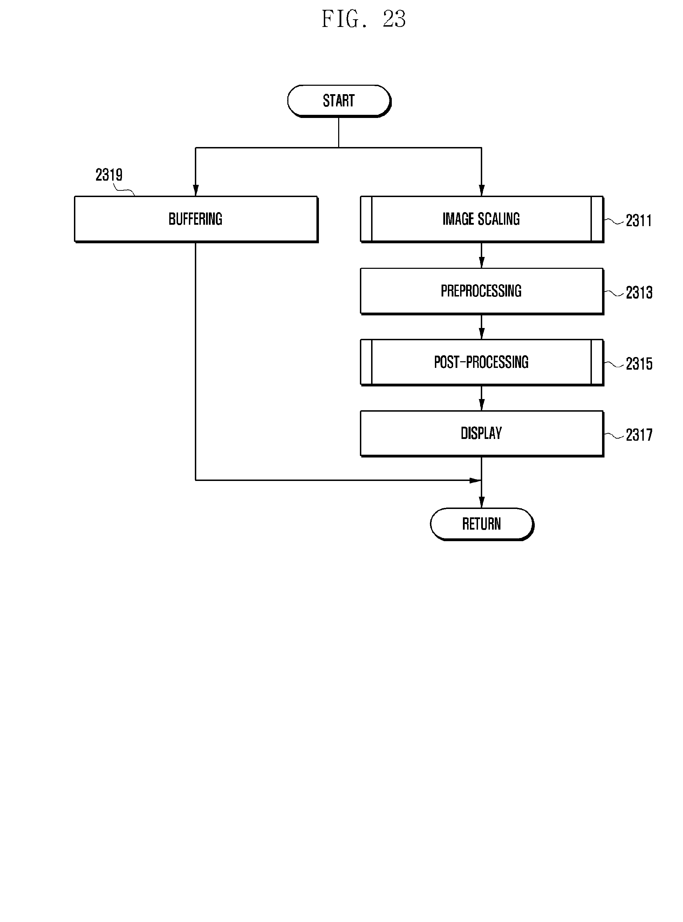

FIG. 23 illustrates the image processing procedure in the preview mode of the camera device according to another embodiment of the present disclosure. FIG. 23 shows the procedure of viewing image processing and camera's full resolution image processing of the still capture ISP in the preview mode.

Referring to FIG. 23, the full resolution image generated by the camera 110 in the preview mode is supplied to the viewing image processor and the still capture ISP. The controller 100 buffers the camera's full resolution images in the buffer 240 at step 2319. The controller 100 also scales the camera's full resolution image to the viewing image at step 2311, preprocesses the viewing image at step 2313, post-processes the image at step 2315, and outputs the post-processed image by means of the display unit 130. That is, in the preview mode, camera device buffers the full resolution images generated by the camera 110 and generates the viewing images to be displayed on the screen of the display unit 130 at every frame period. At this time, the viewing image generation procedure can be perform in such a way of scaling the camera's full resolution image to a viewing image, preprocessing the viewing image, and post-processing the image to display the processed image on the screen of the display unit 130. Since the preview/movie ISP performs preprocessing and post-processing operations on the size-reduced viewing image, it is possible to configure the image processors (preprocessor and postprocessor) with low complexity, thereby reducing electric current consumption in processing the images.

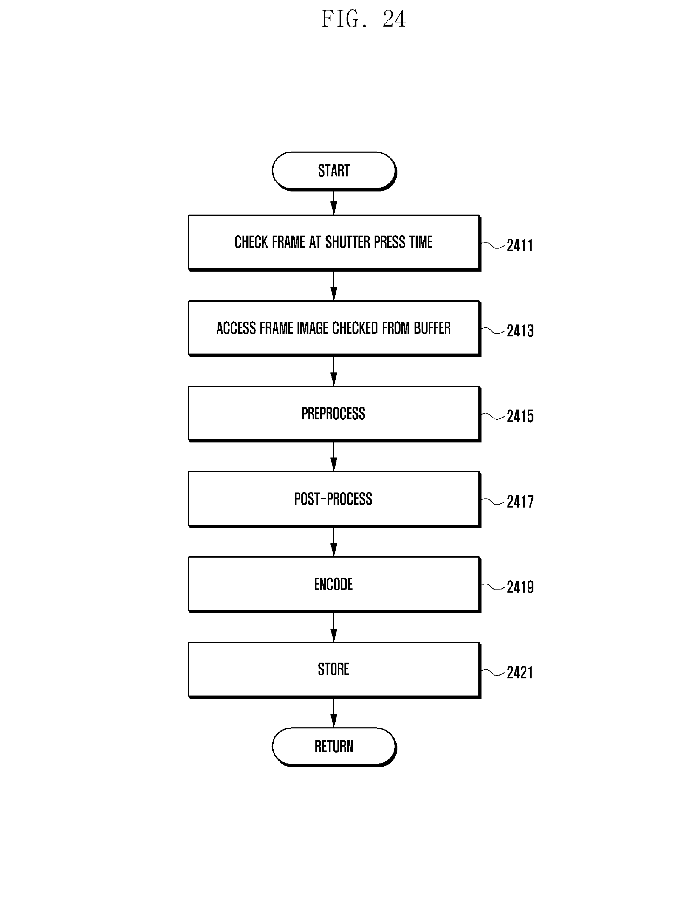

If a capture request is input in this state, the controller 100 detects this and performs the capture image processing procedure of FIG. 24. FIG. 24 is a flowchart illustrating the capture image processing procedure of the camera device according to an embodiment of the present disclosure.

Referring to FIG. 24, if a capture request is detected, the controller 100 checks the frame capable of achieving zero shutter lag at step 2411 and accesses the corresponding frame image in the buffer 240 at step 2413. Next, the controller 100 preprocesses the accessed frame at step 2415, post-processes the preprocessed frame image at step 2417, encodes the post-processed image at step 2419, and stores the encoded image in the storage unit 120 at step 2421. At this time, the viewing image processing is performed simultaneously as shown in FIG. 23.

As shown in FIGs. 23 and 24, the image processing method of the camera device according to another embodiment of the present disclosure buffers the full resolution images generated by the camera 100 and, simultaneously, scales the full resolution image to the viewing image and preprocesses and post-processes the viewing image in sequence to display the processed on the screen. If the capture request is detected, the controller 100 performs preprocessing, post-processing, and encoding on the buffered full resolution images to store the encoded images. Since the camera processes the viewing and capture images distinctively, it is possible to simplify the structure of the preview/movie ISP which is activated in the camera operation mode, thereby simplifying the image processor of the camera device and reducing the electric current consumption.

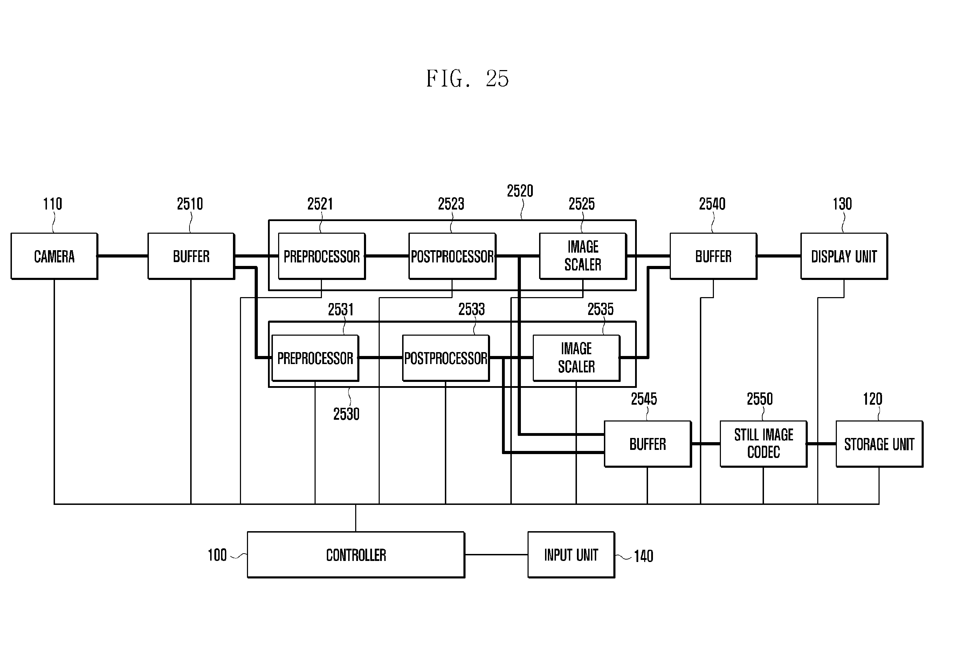

FIG. 25 illustrates the configuration of the camera device according to an embodiment of the present disclosure. The image sensor of the current camera 110 generates high pixel images. At this time, the image processor may not process the high pixel image generated by the camera 110 directly. In this case, the image processor has to reduce the frame rate of the images generated by the camera 110 or scale the image to an appropriate size to process the image efficiently. In order to achieve this, the camera device has to have two or more image processors to process the images generated by the camera 110 in parallel such that the high pixel images are processed at the intended frame rate. FIG. 25 shows an exemplary procedure of processing the image generated by the camera 110 with two image processors arranged in parallel.

Referring to FIG. 25, the image processor includes a first image processor (having a preprocessor 2521, a postprocessor 2523, and an image scaler 2525) and a second image processor (having a preprocessor 2531, a postprocessor 2533, and an image scaler 2535), and buffers 2510, 2540, and 2545 for securing the image processing time of the first and second image processors.

A description is made of the operations of the above-structured image processor. The buffer 2510 buffers the images generated by the camera 110. Here, the buffer 2510 is capable of being configured in a ring buffer structure. The controller 100 controls the buffer 2510 to supply the odd-numbered frame images to the first image processor and the even-numbered frame images to the second image processor. The first image processor 2520 receives the odd-numbered frame images and processes the received frame images through the preprocessor 2521, postprocessor 2523, and image scaler 2525 to generate odd-numbered frame viewing images. Likewise, the second image processor 2530 receives the even-numbered frame images and processes the received frame images through the preprocessor 2531, postprocessor 2533, and image scaler 2535 to generate even-numbered frame viewing images. Here, the preprocessors 2521 ad 2531, the postprocessors 2523 and 2533, and the image scalers 2525 and 2535 can be identical with the preprocessor 210, the postprocessor 230, and the scaler 220 respectively in structure and operation. The images buffered in the buffer 2510 can be the camera's full resolution image and thus the postprocessors 2523 and 2533 can output full resolution images.

In this state, the buffer 2540 buffers the odd-numbered and even-numbered viewing images output by the image scalers 2525 and 2535, and the buffered images are accessed in sequence to be supplied to the display unit 130 in sequence (i.e. interlaced in creation order of the odd-numbered and even-numbered frame viewing images) under the control of the controller 100. Accordingly, the display unit 130 is capable of displaying the images generated by the camera 110 at every frame period. The buffer 2545 also buffers the full resolution images processed by the postprocessors 2523 and 2533. Here, the buffers 2540 and 2545 can be configured in the ring buffer structure.

If a capture request signal is generated by the input unit 140 in this state, the controller 110 detects this and access the frame image taken at the capture request timing, the still image codec 2550 encodes the accessed full resolution image compressively and stores the encoded image in the storage unit 120. That is, the buffer 2545 buffers the full resolution image taken by the camera at a predetermined frame rate, and the controller 100 selects the frame image capable of achieving zero shutter lag, encodes the selected frame image, and stores the encoded image.

As described above, in the case that the first image processor 2520 and the second image processor 2530 of the camera device are the low speed processors having no sensor outputs, the buffer 2510 sorts the images stored in circular order into odd-numbered images (1,3,5,7,...) and even-numbered images (2,4,6,8,...) such that the first and second image processors 2520 and 2530 process the odd-numbered and even-numbered images respectively. Since the first and second image processors 2520 and 2530 processes the images generated by the camera 110 at the ratio of 50:50, if the first and second image processors 2520 and 2530 have the capability over 1/2 of the capability of the camera 100, it is possible to process the frame images in real time. Although the description is directed to the case of the camera device having two image processors, it is possible for configuring the camera device with more than two image processors.

At this time, the first and second image processor 2520 and 2530 output the full resolution images to the postprocessors 2523 and 2535, the image scalers 2525 and 2535 scale the full resolution images to the screen size of the display unit 130, the scaled images are aligned in the order of 1,2,3,4,5,6,7,... which is identical with that of the images generated by the camera, whereby the images is output seamlessly. The full resolution images output by the postprocessor 2523 and 2533 are stored in the order of 1,2,3,4,5,6,7,... which is identical with the output order of the camera 110. If a capture request is input, the full resolution image taken at the capture request timing is selected from the buffer 2545 to be stored in the storage unit 120.

As described above, the camera device according to an embodiment of the present disclosure is provided with the preview/motion image processor and capture image processor configured separately that are operating independently, resulting in reduction of electric current consumption and overheat.

As described above, the camera device or camera-equipped terminal device of the present disclosure generates the preview and capture images by processing the images acquired by the image sensor of a camera at every frame to as to capture an image acquired at an intended time, thereby achieving zero shutter lag and storing intended images selectively among the pictured images. Also, the camera device and camera-equipped terminal device of the present disclosure is capable of being configured with a component for processing the capture image and a component for processing the preview image separately so as to simplify the preview image processing component relatively, thereby reducing power consumption of the camera device and camera-equipped terminal device.

Although the present disclosure has been described with an exemplary embodiment, various changes and modifications may be suggested to one skilled in the art. It is intended that the present disclosure encompass such changes and modifications as fall within the scope of the appended claims.

## Claims

1. An image processing apparatus of a camera device, the apparatus comprising:
a camera (110) configured to generate full resolution images;
a buffer (240) configured to buffer the full resolution images;
a viewing image processor (220, 230) configured to scale the buffered full resolution images to generate viewing images;
a capture image processor (250, 260) configured to process one of the buffered full resolution images to generate a capture image;
a display unit (130) configured to display the viewing images; and
a storage unit (120) configured to store the capture image.

2. The apparatus of claim 1, wherein the buffer (240) is a ring buffer for buffering a predetermined number of frame images.

3. The apparatus of any of claims 1 and 2,
further comprising a preprocessor (210) connected to an output end of the camera (110), wherein the preprocessor (210) performs dead pixel correction and lens shading correction on the images output by the camera (110), wherein
the viewing image processor (220, 230) comprises an image scaler (220) configured to scale the preprocessed images to the viewing image and a post processor (230) configured to post-process the scaled viewing images to generate YUV images, and
the capture image processor (250, 260) comprises a postprocessor configured to post-process the full resolution image accessed in the ring buffer in response to a capture request to generate the YUV image and a still image codec (260) configured to encode the images output by the postprocessor (250).

4. The apparatus of any of claims 1 and 2, wherein
the viewing image processor (220, 230) comprises an image scaler (220) configured to scale the full resolution image of the camera to a viewing image and a preprocessor (1110) configured to perform dead pixel correction and lens shading on the viewing image; and
the capture image processor (250, 260) comprises a preprocessor (1120) configured to perform dead pixel correction and lens shading correction on the full resolution image accessed in the ring buffer (240) in response to a capture request, a postprocessor (250) configured to process the preprocessed full resolution image to generate a YUV image, and a still image codec (260) which encodes the image output by the postprocessor.

5. The apparatus of any of claims 1 to 4, wherein the capture image processor further includes a clock generator comprising a high clock generator (610), a low clock generator (620), and a selector (630) for selecting one of the clock generators, wherein the capture image processor is configured to process, when the high clock generator (610) is selected, the capture image at high clock speed.

6. The apparatus of any of claims 1 to 5, wherein the capture image processor comprises a combiner (810), the capture image processor is configured to segment and access the full resolution image generated at a shutter press time in the ring buffer (240) and process segmented images, and the combiner (810) is configured to combine the segmented images processed by the capture image processor into a frame image and supply the frame image to the still image codec (260).

7. The apparatus of any of claims 1 to 6, wherein the image scaler (220) is a resizer (310) configured to scale the full resolution image of the camera (110) to a viewing image size of the display unit (130), the image scaler (220) being an averaging unit (320) configured to sum and average adjacent pixels in the full resolution image of the camera (110) to reduce a number of pixels to be fit for the viewing image size of the display unit (130).

8. The apparatus of claim 1, wherein the capture image processor (250, 260) is configured to encode the image taken at a shutter press time among the buffered images, in response to a capture request, to generate a capture image compensated for shutter lag.

9. The apparatus of claim 8,
wherein the camera (110) is configured to generate the full resolution images in a camera operation mode;
wherein the apparatus comprises an image processor (200) comprising the buffer (240), the viewing image processor (220, 230), and the capture image processor (250, 260);
wherein the buffer (240) is configured to buffer the full resolution images generated by the camera (110) at every frame period;
wherein the viewing image processor (220, 230) is configured to scale the full resolution images to viewing images simultaneously;
wherein the apparatus further comprises an application processor (1420) configured to buffer the viewing and capture images output by the image processor (200), display the viewing image in a preview mode, and store the capture image in a capture mode;
wherein the display unit (130) is configured to display the viewing image under the control of the application processor (1420); and
wherein the storage unit (120) is configured to store the capture image under the control of the application processor (1420).

10. An image processing method of a camera device, the method comprising:
buffering (2319) and processing (2311-2315) full resolution images of a camera to viewing images to be displayed at every frame period in a preview mode; and
generating and storing (2421) a capture image compensated for shutter lag by processing (2415, 2417) and encoding (2419) the image taken at shutter press time (2411) among the buffered images in a capture mode.

11. The method of claim 10, wherein the buffering (2319) full resolution images comprises buffering with a ring buffer, and the capture image is the image of the frame capable of achieving zero shutter lag.

12. The method of any of claims 10 and 11, wherein the buffering and the processing comprises preprocessing (1811) the camera image output by the camera and post-processing (1815) the preprocessed image by buffering (1813) the preprocessed image, scaling (1813) the preprocessed image to viewing image, and converting the scaled viewing image to a YUV image; and
the capturing comprises capturing (2011) the full resolution image of the frame having zero shutter lag, post-processing (2013) the captured image to generate the YUV image, and encoding (2015) the post-processed capture image.

13. The method of any of claims 10 and 11, wherein the buffering (2319) and the processing (2311-2315) comprises buffering (2319) the full resolution image of the camera, scaling (2311) the full resolution image to a viewing image, preprocessing (2313) the viewing image, and post-processing (2315) the preprocessed viewing image; and
the generating and the storing comprises preprocessing (2415) the full resolution image captured (2411) at the frame having zero shutter lag among the buffered full resolution images in response to a capture request, post-processing (2417) the preprocessed full resolution image, and encoding (2419) the post-processed image.

14. The method of any of claims 12 and 13, wherein the camera device comprises a clock generator having a high clock, a low clock having a frequency lower than the frequency of the high clock, and a selector for selecting one of high and low clocks, and wherein the method comprises processing (2117) the capture image with high clock in a capture mode.

15. The method of any of claims 12 to 14, wherein the capturing comprises:
segmenting and accessing (2215) the full resolution image in the ring buffer at a capture image processor in response to a capture request;
combining (2219) the post-processed segment images into a frame image; and
encoding (2225) the frame image.
